Europäisches Patentamt

European Patent Office

Office européen des brevets

(11) Numéro de publication: **0 286 665 B1**

(12) **FASCICULE DE BREVET EUROPEEN**

(45) Date de publication de fascicule du brevet: **23.12.92** (51) Int. Cl.5: **H04L 27/00**, H04B 7/005

(21) Numéro de dépôt: **87906676.9**

(22) Date de dépôt: **06.10.87**

(86) Numéro de dépôt internationale :
**PCT/FR87/00385**

(87) Numéro de publication internationale :
**WO 88/02962 (21.04.88 88/09)**

(54) **DISPOSITIF ET PROCEDE DE TRANSMISSION OU DE STOCKAGE D'INFORMATIONS OPTIMISANT L'UTILISATION DE LA BANDE PASSANTE.**

(30) Priorité: **07.10.86 FR 8613940**

(43) Date de publication de la demande:
**19.10.88 Bulletin 88/42**

(45) Mention de la délivrance du brevet:
**23.12.92 Bulletin 92/52**

(84) Etats contractants désignés:
**DE GB IT NL**

(56) Documents cités:
**EP-A- 0 187 406**
**DE-A- 3 125 536**
**US-A- 4 178 549**

**IEEE Transactions on Communications, Part I, vol. COM-28, no. 9, September 1980, IEEE (New York, US); D.M. Grieco : "The application of charge-coupled devices to spread-spectrum systems", pages 1693-1705**

(73) Titulaire: **THOMSON-CSF**
**51, Esplanade du Général de Gaulle**
**F-92800 Puteaux(FR)**

(72) Inventeur: **FOUCHE, Yvon**
**48, rue Roger-Salengro**
**F-92290 Châtenay-Malabry(FR)**
Inventeur: **DESODT, Guy**
**20, rue de l'Effort-Mutuel**
**F-91300 Massy(FR)**
Inventeur: **ELLEAUME, Philippe**
**49, rue de Châtenay**
**F-92160 Antony(FR)**
Inventeur: **AUVRAY, Gérard**
**15, allée des Charmes**
**F-91310 Longpont-sur-Orge(FR)**
Inventeur: **ANASTASSIADES, Jean**
**34, chemin des Préhards**
**F-91370 Verrières-le-Buisson(FR)**

Rank Xerox (UK) Business Services

Ericsson Review, vol. 58, no. 3, 1981 (Stockholm, SE), E. Lundblad : "Contact RL400 - a new radio relay equipment", pages 128-133

Telecommunications & Radio Engineering, vol. 36/37, no. 9, September 1982 (Silverspring, Maryland, US); S.S. Kogan : "The use of the statistical properties of a digital signal in digital television systems", pages 11-18

Proceedings of IEEE, vol. 68, no. 3, March 1980, IEEE (New York, US); G.L. Turin : "Introduction to spread-spectrum antimultipath techniques and their application to urban digital radio", pages 328-353

(74) Mandataire: **Benoit, Monique et al**
**THOMSON-CSF SCPI B.P. 329**
**F-92402 COURBEVOIE CEDEX(FR)**

# EP 0 286 665 B1

## Description

La présente invention a principalement pour objet un dispositif et un procédé de transmission ou de stockage d'informations optimisant l'utilisation de la bande passante.

Depuis plusieurs années des efforts sont accomplis pour transmettre des débits de plus en plus importants d'information.

Par exemple pour les transmissions d'information par voie radio l'utilisation de la modulation d'amplitude et de la modulation de fréquence conduit à utiliser des fréquences porteuses de plus en plus élevées. Or la transmission d'information en modulation de phase permettrait d'augmenter sensiblement le débit. Toutefois ce type de transmission se heurte à deux problèmes, qui dans les dispositifs de type connu, limitent les performances en dessous de celles des dispositifs à modulation d'amplitude ou à modulation de fréquence.

D'une part, pour pouvoir, à la réception, décoder les informations codées en modulation de phase il est impératif de disposer d'une référence de phase stable. Ainsi, il est indispensable d'obtenir une parfaite synchronisation des horloges à l'émission et à la réception. De la stabilité des horloges ainsi que de la précision des comparateurs de phase dépend, pour une fréquence de l'onde porteuse donnée, les débits d'information que l'on peut transmettre.

D'autre part, les performances des dispositifs de transmission des données en modulation de phase sont limitées par les échos multiples. En effet lors d'utilisation d'ondes cohérentes des échos multiples risquent d'interférer avec le signal direct et de perturber la réception.

On connaît d'après les documents suivants : IEEE Transactions on Communications - Part I, volume COM-28, no 9, septembre 1980, IEEE, (New York, US), D.M. Grieco : "The application of charge-coupled devices to spread-spectrum systems", pages 1693-1705, US-A-4 178 549, Ericsson Review, volume 58, no. 3, 1981, (Stockholm, SE), E. Lundblad : "Contact RL400 - a new radio relay equipment", pages 128-133, Telecommunications & Radio Engineering, volume 36/37, no.9 septembre 1982, (Silver Spring, Maryland, US), S.S. Kogan : "The use of the statistical properties of a digital signal in digital television systems", pages 11-18, Proceedings of IEEE, volume 68, no. 3, mars 1980, IEEE, (New York, US), G.L. Turin : "Introduction to spread-spectrum antimultipath techniques and their application to urban digital radio", pages 328-353, des dispositifs de transmission d'informations, mais aucun d'eux ne se rapporte à la transmission à très haut débit d'informations codées en phase, et n'apporte de solution à la synchronisation parfaite entre horloges d'émetteur et de récepteurs.

Le dispositif objet de la présente invention permet en utilisant, en modulation de phase, des codes par exemple pseudo-aléatoires d'augmenter le rapport signal/bruit par compression d'impulsion et/ou d'obtenir la synchronisation des horloges d'émission et de réception. Avantageusement, à la réception, la synchronisation périodique de l'horloge est obtenue par convolution et/ou corrélation du signal reçu avec un code pseudo-aléatoire. La synchronisation est améliorée par l'utilisation de code de grande longueur.

Dans une variante de réalisation du dispositif selon l'invention on utilise pour la convolution des codes réguliers comme par exemple 0, ¶, 0, ¶, 0, ¶, 0, ¶, ...

L'utilisation d'un code pseudo-aléatoire à la synchronisation de l'horloge de réception permet d'assurer la confidentialité des transmissions effectuées. Il est ainsi possible d'effectuer des transmissions qui ne pourront être reçues que par le récepteur équipé du générateur du code pseudo-aléatoire approprié. Ainsi il est notamment possible d'effectuer des émissions de télévision payantes.

Les échos multiples sont avantageusement éliminés par les calculs.

D'autre part les performances du dispositif selon la présente invention sont encore augmentées par l'adoption d'une modulation par mesures du temps écoulé avant une transition par exemple à l'intérieur de périodes de temps de durée fixée.

La présente invention n'est pas limitée à la transmission de données. Elle se rapporte aussi au stockage de données sur par exemple un média magnétique. L'utilisation de la modulation de phase ou de la modulation où l'on mesure des temps écoulés avant une transition à l'intérieur de périodes de temps de durée fixées permet d'augmenter la densité du stockage et d'obtenir un même type de modulation dans toute la chaîne : émission-réception-enregistrement.

L'invention a principalement pour objet un procédé de transmission à modulation de phase d'informations utilisant un émetteur et un récepteur, ledit émetteur et ledit récepteur comportant une horloge, caractérisé par le fait que ledit procédé comporte les étapes :

- modulation des informations codées en phase par un code, à l'émission ;
- convolution et/ou corrélation à la réception du signal reçu avec ledit code ;
- synchronisation de l'horloge de réception avec un pic obtenu par la convolution et/ou par la corrélation du signal reçu par ledit code.

3

EP 0 286 665 B1

L'invention a aussi pour objet un procédé de transmission caractérisé par le fait que ledit procédé comporte les étapes :
- modulation des informations codées en phase par un code, à l'émission ;
- convolution et/ou corrélation à la réception du signal reçu avec ledit code ;
- synchronisation de l'horloge de réception avec un pic obtenu par la convolution et/ou par la corrélation du signal reçu par ledit code.

L'invention a aussi pour objet un procédé de transmission, caractérisé par le fait que ledit procédé est un procédé de transmission d'émission de télévision.

L'invention a aussi pour objet un procédé caractérisé par le fait que ledit procédé permet de transmettre des informations nécessaires à la formation d'une image de télévision de définition moyenne ainsi que des informations complémentaires susceptibles après traitement d'améliorer la qualité de l'image.

L'invention a aussi pour objet un procédé caractérisé par le fait que ledit procédé est un procédé de transmission de données alpha-numériques.

L'invention a aussi pour objet un procédé caractérisé par le fait que

L'invention a aussi pour objet un procédé d'enregistrement d'informations caractérisé par le fait que l'on procède à l'enregistrement d'un code susceptible à la lecture de permettre par convolution et/ou corrélation d'obtenir à la lecture la synchronisation d'une horloge avec une horloge d'enregistrement.

L'invention a aussi pour objet un procédé d'enregistrement caractérisé par le fait que la valeur du signal à des instants déterminés par l'horloge de lecture sont fonction de l'information enregistrée.

L'invention a aussi pour objet un procédé d'enregistrement caractérisé par le fait que ledit procédé d'enregistrement est un procédé d'enregistrement magnétique.

L'invention a aussi pour objet une modulation d'un signal électrique caractérisée par le fait que ledit signal comporte des premières transitions survenant aux instants répartis régulièrement dans le temps et des secondes transitions l'instant où surviennent lesdites secondes transitions étant fonction de l'information à transmettre.

L'invention a aussi pour objet une modulation caractérisée par le fait qu'une modulation d'amplitude se superpose à ladite modulation sans que l'atténuation provoquée par ladite modulation d'amplitude empêche la réception des transitions.

L'invention a aussi pour objet un émetteur de rayonnement électromagnétique modulé comportant une antenne, un amplificateur, une source de signal à émettre, un dispositif de codage de phase et une horloge, caractérisé par le fait qu'il comporte un dispositif générateur de code pseudo-aléatoire relié à l'horloge et à des moyens de modulation d'amplitude pour moduler en amplitude à l'aide dudit code pseudo-aléatoire les signaux modulés en phase.

L'invention a aussi pour objet un émetteur caractérisé par le fait qu'il comporte une régie permettant de modifier et/ou de répartir les informations à transmettre entre une pluralité de canaux de transmission.

L'invention a aussi pour objet un émetteur caractérisé par le fait que ledit émetteur est un émetteur d'émissions de télévision.

L'invention a aussi pour objet un émetteur caractérisé par le fait que ledit émetteur est un émetteur d'émissions radiophoniques.

L'invention a aussi pour objet un dispositif de transmission de données comportant un ensemble d'émetteurs comprenant une antenne, un amplificateur et un ensemble de réceptions comprenant une antenne, et un amplificateur, caractérisé par le fait que l'ensemble d'émissions comprend un dispositif de génération de codes et un dispositif de codage du signal à émettre ; l'ensemble de réception comportant un générateur de code et des dispositifs de corrélation et/ou convolution du signal reçu par le code engendré par ledit générateur de code.

L'invention a pour objet un récepteur d'ondes électromagnétiques coopérant avec l'émetteur défini ci-dessus et comportant une antenne, un amplificateur, un démodulateur de phase, un oscillateur local et une horloge reliée à l'oscillateur local et au démodulateur, caractérisé par le fait qu'il comporte un générateur de code pseudo-aléatoire relié à des dispositifs effectuant la corrélation et/ou la convolution du signal de synchronisation obtenu par démodulation d'amplitude du signal reçu avec le code engendré par ledit générateur de code, ces dispositifs étant reliés à l'amplificateur et à l'horloge pour la synchroniser, l'horloge étant elle-même reliée au démodulateur de phase pour le synchroniser.

L'invention a pour objet un récepteur caractérisé par le fait que ledit récepteur est un récepteur d'émissions de télévision.

L'invention a aussi pour objet un récepteur caractérisé par le fait qu'il comporte une mémoire vive vidéo et un processeur d'adresse susceptible de remplacer dans ladite mémoire vive vidéo des informations qui s'y trouvent par des nouvelles informations transmises.

L'invention a aussi pour objet un récepteur caractérisé par le fait qu'il comporte un calculateur et une

4

mémoire vive vidéo susceptible de stocker au moins une image, le calculateur étant susceptible de modifier tout ou partie de l'image stockée dans la mémoire vive vidéo d'après les informations reçues.

L'invention a aussi pour objet un récepteur caractérisé par le fait qu'il comporte un dispositif permettant, par le calcul, d'éliminer les échos multiples en les soustrayant au signal ou en les retardant de façon à les mettre en phase modulo 2¶, avec le signal direct.

L'invention a aussi pour objet un récepteur caractérisé par le fait qu'il est susceptible d'éliminer les échos multiples en résolvant le système :

$$Y_n = a_0 S_0 + a_1 S_1 + a_2 S_2 + \ldots + a_n S_n$$
$$Y_{n+1} = a_0 S_1 + a_1 S_2 + a_2 S_3 + \ldots + a_n S_{n+1}$$
$$Y_{n+2} = a_0 S_2 + a_1 S_3 + a_2 S_4 + \ldots + a_n S_{n+2}$$
$$Y_{n+3} = a_0 S_3 + a_1 S_4 + a_2 S_5 + \ldots + a_n S_{n+3}$$
$$.$$
$$Y_{n+i} = a_0 S_i + a_1 S_{i+1} + a_2 S_{i+1} + \ldots + a_4 S_{n+i}$$
$$.$$
$$Y_{n+p} = a_0 S_p + a_1 S_{p+1} + \ldots + a_n S_{p+n}$$

$a_1$ représente l'amplitude complexe du premier signal réfléchi, $a_2$ du deuxième signal réfléchi, $a_3$ du troisième signal réfléchi, $a_i$ du $i^{ème}$ signal réfléchi, $a_n$ représente l'amplitude du signal direct, $Y_{n+i}$ étant le signal reçu à l'instant $n+i$.

L'invention a aussi pour objet un récepteur caractérisé par le fait que le dispositif susceptible d'effectuer la convolution du signal reçu par un code comportant un dispositif à transfert de charges dont certaines cellules, correspondant au code binaire utilisé, sont reliées à une sortie.

L'invention a aussi pour objet un récepteur caractérisé par le fait qu'il comporte un dispositif de réduction de fréquence.

L'invention a aussi pour objet une régie caractérisée par le fait qu'elle est susceptible de répartir des informations à transmettre entre une pluralité de canaux de transmission.

L'invention a aussi pour objet une régie caractérisée par le fait que ladite régie est numérique.

L'invention sera mieux comprise au moyen de la description ci-après et des figures annexées données comme des exemples non limitatifs parmi lesquels :
- la figure 1 est un schéma illustrant le principe de la modulation de phase ;
- la figure 2 est un schéma illustrant le principe de la modulation de phase et de la modulation d'amplitude ;
- la figure 3 est un schéma d'un premier exemple de réalisation d'un dispositif d'émission de télévision selon l'invention ;
- la figure 4 est un schéma d'un deuxième exemple de réalisation d'un dispositif d'émission de télévision selon l'invention ;
- la figure 5 est un schéma d'un troisième exemple de réalisation d'un dispositif d'émission de télévision selon l'invention ;
- la figure 6 est un schéma d'un premier exemple de réalisation d'un récepteur de télévision selon l'invention ;
- la figure 7 est un schéma d'un deuxième exemple de réalisation d'un récepteur de télévision selon l'invention ;
- la figure 8 est un schéma d'un troisième exemple de réalisation d'un récepteur de télévision selon l'invention ;
- la figure 9 est un schéma d'un exemple de réalisation d'un émetteur d'émission radiophonique selon l'invention ;
- la figure 10 est un schéma d'un exemple de réalisation d'un récepteur radiophonique selon l'invention ;
- la figure 11 est un exemple de réalisation d'un dispositif de transmission des données selon l'invention ;
- la figure 12 est un schéma d'une régie utilisée dans le dispositif selon l'invention ;

- la figure 13 est un chronogramme d'une modulation selon l'invention ;
- la figure 14 est un chronogramme d'une modulation selon l'invention ;
- la figure 15 est un chronogramme d'une modulation selon l'invention ;
- la figure 16 est un schéma d'un oscillateur susceptible d'être mis en oeuvre dans le dispositif selon l'invention ;
- la figure 17 est un schéma d'un premier exemple de réalisation d'un codeur de phase susceptible d'être mis en oeuvre dans le dispositif selon l'invention ;
- la figure 18 est un schéma d'un second exemple de réalisation d'un codeur de phase susceptible d'être mis en oeuvre dans le dispositif selon l'invention ;
- la figure 19 est un schéma d'un premier exemple de réalisation d'un démodulateur de phase susceptible d'être mise en oeuvre dans le dispositif selon l'invention ;
- la figure 20 est un schéma d'un second exemple de réalisation d'un démodulateur de phase selon l'invention ;
- la figure 21 est un schéma d'un exemple de réalisation d'un enregistreur selon la présente invention.

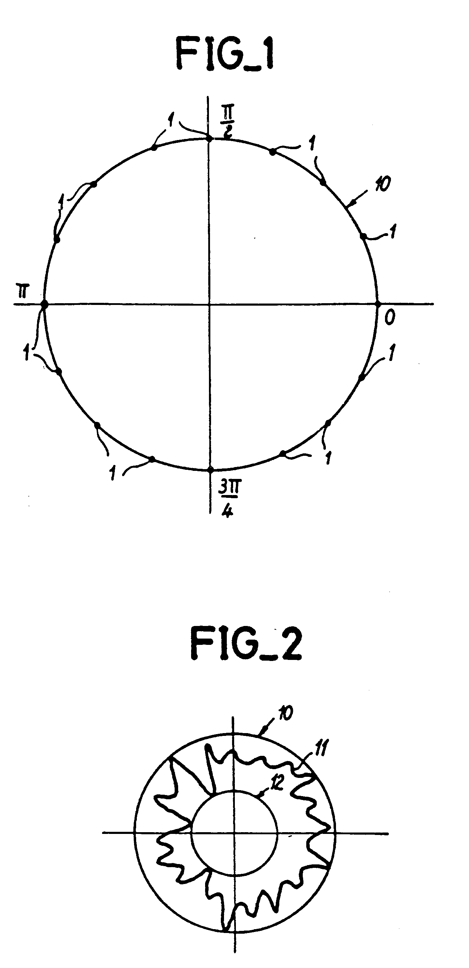

Sur les figures 1 à 21 on a utilisé les mêmes références pour désigner les mêmes éléments.

Sur la figure 1, on peut voir un schéma illustrant le principe de la modulation de phase. Le cercle 10 est un cercle trigonométrique.

Dans la transmission numérique par modulation de phase la valeur de la phase peut prendre un nombre fini de valeurs discrètes comprises entre 0 et 2π. Ces valeurs discrètes sont représentées par des points 1 sur le cercle trigonométrique 10. Le nombre de points 1 sur un cercle trigonométrique 10 dépend de la précision de la synchronisation des horloges d'émission et de réception et du rapport S/B à la réception. Meilleure sera la synchronisation, plus il sera possible de discerner des points 1 distincts, et par suite plus grand sera le débit d'information transmis. Dans l'exemple illustré sur la figure 1, seuls seize points 1 ont été représentés. Il est bien entendu qu'un nombre bien plus grand de points 1 peut être utilisé. Par exemple avec les technologies actuelles il est possible de discerner des points 1 distants de 0,1 degré d'angle. Avantageusement, les points 1 sont répartis régulièrement sur le cercle trigonométrique 10.

La phase peut prendre une quelconque des valeurs appartenant à l'intervalle 0,2π dans le cas des transmissions analogiques par modulation de phase.

La modulation de phase permet de travailler en amplitude constante. Avantageusement les amplificateurs d'émission travaillant en régime saturé par exemple en classe C permet d'optimiser le rendement des émetteurs.

Sur la figure 2, on peut voir un schéma illustrant la modulation en phase et en amplitude simultanée. La diagramme de la figure 2 illustre la possibilité que peut prendre la phase et l'amplitude du signal 11 émis. Pour ne pas perdre des informations de phase il est nécessaire que l'amplitude du signal soit comprise entre deux cercles 10 et 12, le cercle 10 correspondant à l'amplitude maximale susceptible d'être émise, le cercle 12 à l'amplitude minimale permettant d'effectuer une mesure de phase.

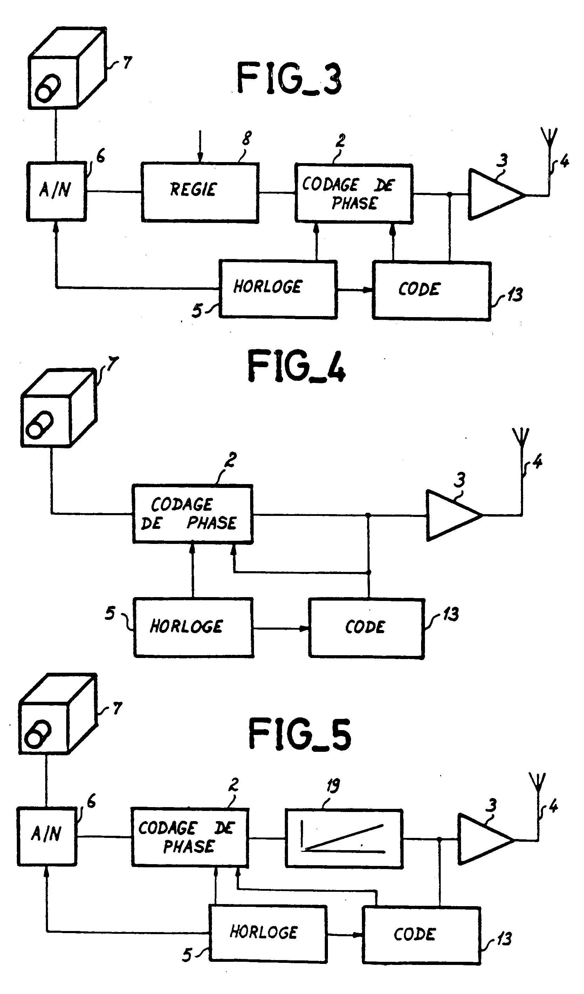

Sur la figure 3, on peut voir un dispositif permettant de réaliser des émissions de télévision. Ledit dispositif comporte, connectés en série, une source de signal vidéo par exemple une caméra de télévision 7, un convertisseur analogique-numérique 6, un dispositif de codage de phase 2, un amplificateur 3 et une antenne d'émission 4. Une horloge de grande précision 5 est reliée au convertisseur analogique-numérique 6, au dispositif de codage de phase 2 et à un générateur de code pseudo-aléatoire 13. La dispositif générateur de code pseudo-aléatoire 13 est relié au dispositif de codage de phase 2 et/ou à l'entrée de l'amplificateur 3.

Avantageusement, une régie 8 permet de choisir, de mélanger, ou de modifier les images que l'on désire émettre la régie 8 permet d'exploiter les possibilités du dispositif selon la présente invention, notamment le fait qu'il est possible de séparer le canal physique de transmission des données transmises. Ainsi, il est par exemple possible de transmettre sur un même canal des images de télévision, du son, des données alphanumériques ainsi que des signaux de commande de machines. La régie 8 permet de traiter, mélanger et répartir entre divers canaux les données à transmettre. Dans l'exemple illustré sur la figure 3, la régie 8 est une régie numérique. Elle se trouve donc entre la sortie du convertisseur analogique-numérique 6 et l'entrée du dispositif de codage de phase 2. La régie 8 dispose d'entrées lui permettant de recevoir des images vidéo provenant d'autres sources, comme par exemple d'autres caméras de télévision ou des magnétoscopes (non représentés).

Avantageusement la régie 8 permet de former une pluralité de canaux transmis simultanément sur une pluralité d'ondes porteuses et/ou en multiplexage temporel. Ainsi il est possible de ne pas limiter les transmissions aux images de télévision mais ainsi de transmettre par exemple des données numérisées ou du son.

Dans une variante de réalisation utilisant une régie 8 analogique la régie se trouve entre la caméra 7 et l'entrée du convertisseur analogique-numérique 6.

La caméra de télévision 7 permet d'obtenir une image vidéo. L'image vidéo est numérisée par le convertisseur analogique-numérique 6 synchronisé par l'horloge 5. La régie 8 permet d'effectuer les modifications jugées nécessaires de l'image numérisée. Le dispositif de codage de phase 2 convertit la valeur numérique de l'image à une valeur de la phase du signal. Par exemple si le signal vidéo a été numérisé sur quatre bits (ce qui correspond à seize niveaux) la valeur "4" correspondra à un retard de phase de ¶/2. La valeur de quatre bits a été choisie à titre d'exemple non limitatif il est bien entendu que des numérisations du signal vidéo comportant un nombre de bits bien plus important ne sort pas du cadre de la présente invention. Le nombre de niveaux de phase distincte est limité par la précision des horloges notamment de l'horloge d'émission, des détecteurs de phase et celle de la synchronisation ainsi que par le rapport signal sur bruit. Il faut toutefois rappeler que les possibilités de synchronisation d'horloge à distance, par voie radio sont limitées par la fréquence des ondes porteuses utilisées et par la théorie de la relativité.

Pour un bon fonctionnement du système il est impératif qu'à la réception on puisse recréer une référence de phase. Comme on le verra plus loin, pour cela on utilisera une horloge. Toutefois, il est impératif d'effectuer des synchronisations périodiques des horloges d'émission et de réception. La fréquence de ces synchronisations de l'horloge d'émission et de réception est fonction de la précision et de la stabilité de ces horloges. L'horloge 5 d'émission faisant partie d'un équipement très coûteux sera avantageusement une horloge de très grande précision à long terme par exemple une horloge atomique. Selon la précision désirée l'horloge 5 sera par exemple une horloge rubidium ou cesium ou une horloge au cesium sur jet atomique. Le choix de l'horloge utilisée dépend notamment des distances sur lesquelles on peut pouvoir transmettre.

Il est avantageux d'utiliser un oscillateur à quartz présentant une grande stabilité à court terme asservi à une horloge atomique présentant une grande stabilité à long terme.

L'asservissement d'une horloge à quartz peut provoquer des instabilités engendrées par la dissipation de l'énergie fournie à l'oscillateur pour le forcer à prendre une valeur désirée. Pour s'affranchir desdites instabilités une variante de réalisation comporte deux oscillateurs à quartz synchronisés alternativement sur une horloge atomique. On synchronise un oscillateur à quartz avec l'horloge atomique, simultanément et jusqu'à sa propre synchronisation l'autre oscillateur à quartz est utilisé comme référence pour l'émission.

L'utilisation de deux oscillateurs à quartz asservis alternativement n'est pas limités à l'émetteur. Dans le récepteur il est avantageux d'utiliser deux oscillateurs à quartz asservis alternativement à l'horloge de l'émetteur.

Avantageusement, la synchronisation de l'horloge d'émission 5 et une horloge de réception est obtenue par convolution et/ou corrélation du signal reçu par un code par exemple pseudo-aléatoire. Pour obtenir la synchronisation d'horloge de cette façon il est nécessaire d'émettre un code.

Dans une première variante de réalisation, un générateur de code pseudo-aléatoire 13 émet en permanence un code. Le générateur de code pseudo-aléatoire 13 est relié au dispositif de codage de phase 2. Le code pseudo-aléatoire engendré par le générateur 13 est superposé en permanence au codage de phase de l'image. Par exemple l'image codée en phase est modulée par le code pseudo-aléatoire.

Cette modulation peut être de faible amplitude. A la réception la corrélation du code pseudo-aléatoire engendré par un générateur 13, par le même code, permet d'extraire des signaux de synchronisation d'horloge. Plus la modulation de codage de phase par le code engendré par le générateur de code pseudo-aléatoire 13 est faible, plus il sera nécessaire d'utiliser des codes longs. Dans la mesure où le codage est connu et/ou à la réception on arrive à obtenir des signaux de synchronisation il sera possible en plus de la démodulation de phase de l'image d'effectuer une démodulation de phase correspondant au code de synchronisation. Ainsi, la modulation due au code pseudo-aléatoire ne dégrade sensiblement pas le rapport signal/bruit.

Avantageusement, un code pseudo-aléatoire unique permet un codage de phase augmentant le rapport signal/bruit, assure la synchronisation des horloges et ainsi, de plus, permet de rendre secrètes les transmissions.

Il est avantageux d'effectuer un codage des données à transmettre permettant une compression d'impulsion. En plus de l'amélioration du support signal/bruit on assure la confidentialité de la transmission car sans connaître le codage utilisé il est impossible de décoder le signal.

Dans une seconde variante de réalisation le code de synchronisation est émis périodiquement, par exemple en alternance avec les données à transmettre.

Avantageusement, dans le cas d'émission de programmes de télévision, le code pseudo-aléatoire assurant la synchronisation est émis durant les intervalles de temps qui ne sont pas utilisés pour transmettre le signal comme les retours lignes et/ou les retours trames.

Dans le cas où le dispositif de codage est un dispositif de codage de phase l'amplificateur d'émission 3 peut travailler en classe C dans laquelle il a le meilleur rendement.

Dans le cas où on désire pour encore augmenter le débit d'information transmis, obtenir un codage de phase et un codage d'amplitude, l'émetteur 3 travaille de façon classique. La modulation d'amplitude peut fournir des informations complémentaires de celles transmises par modulation de phase. Par exemple la modulation de phase transmet une image vidéo, la modulation d'amplitude transmet des informations complémentaires permettant d'obtenir une image vidéo haute définition.

Avantageusement, le codage de phase effectué par le dispositif 2 est choisi de telle manière que le rapport signal/bruit soit maximal.

Sur la figure 4, on peut voir un dispositif de transmission analogique d'émission de télévision. Le dispositif comporte, connectés en série, une caméra de télévision 7, un dispositif de codage de phase 2, un amplificateur 3 et une antenne d'émission 4. Une horloge 5 est connectée au dispositif de codage de phase 2 et à un générateur de code pseudo-aléatoire 13. Le générateur de code pseudo-aléatoire 13 est connecté au dispositif de codage de phase 2 et/ou à l'entrée de l'amplificateur 3.

Le dispositif de codage de phase 2 effectue une modulation analogique de phase du signal vidéo reçu, par exemple, de la caméra 7. L'amplificateur 3 est avantageusement un amplificateur cohérent. Par exemple l'amplificateur 3 est un amplificateur à ondes continues. Avantageusement, pour la modulation phase-amplitude on effectue les émissions en bande latérale unique. Ainsi on diminue la puissance d'émission et l'on facilite le décodage.

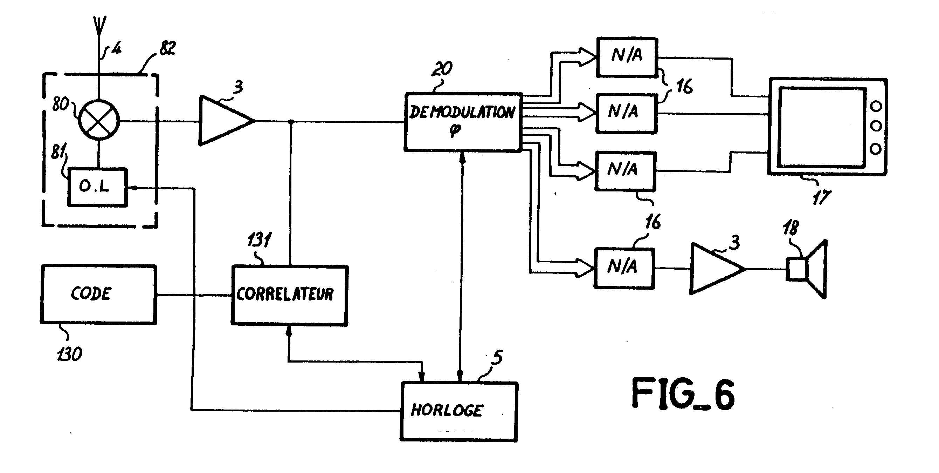

Sur la figure 5, on peut voir un dispositif de transmission d'émission de télévision. Ledit dispositif comporte, connectés en série, une caméra de télévision 7, un convertisseur analogique-numérique 6, un dispositif de codage de phase 2, un dispositif de compression d'impulsions 19, un amplificateur 3, une antenne 4. Une horloge 5 est connectée en parallèle, au convertisseur analogique-numérique 6, au dispositif de codage de phase 2 et à un générateur de code pseudo-aléatoire 13. Le générateur de code pseudo-aléatoire 13 est connecté soit au dispositif de codage de phase 2, et/ou à l'entrée de l'amplificateur 3. Le dispositif de compression d'impulsion 19 permet par un codage de phase approprié connu en sol d'augmenter le rapport signal/bruit. Par exemple le dispositif 19 effectue une variation de la fréquence en fonction du temps. Pour les versions analogiques du dispositif selon l'invention, le dispositif 19 est par exemple un filtre à onde acoustique de surface (SAW en terminologie anglo-saxonne).

Dans une variante de réalisation non représentée, le dispositif de codage de phase 2 assure la compression d'impulsion.

Sur la figure 6 on peut voir un récepteur de télévision selon la présente invention. Le dispositif de la figure 6 comporte connectés en série, une antenne 4, un dispositif de changement de fréquence 82, un amplificateur fréquence intermédiaire 3, un dispositif de démodulation de phase 20, des convertisseurs numériques-analogiques 16, un tube cathodique 17 ou un amplificateur audiophonique 3 et un haut-parleur 18. A la sortie de l'amplificateur fréquence intermédiaire 3 est connecté un corrélateur 131 recevant d'autre part à partir d'un générateur de code pseudo-aléatoire 130 un code pseudo-aléatoire. Le corrélateur 131 permet la synchronisation à la réception d'une horloge 5 avec l'horloge 5 des figures 3 à 5. L'horloge 5 est reliée au dispositif de démodulation de phase 20. Le dispositif de conversion de fréquence 82 comporte par exemple un oscillateur local 81 alimentant un duplexeur 80. La réduction de fréquence est obtenue par battement entre le signal engendré par l'oscillateur local 81 et le signal reçu par l'antenne 4. Avantageusement l'oscillateur local 81 est connecté à l'horloge 5. Avantageusement, le dispositif de conversion de fréquence 82 délivre sur deux sorties en quadrature, non représentées, le signal sans déphasage et le signal déphasé de $\pi/2$.

Dans un premier temps le corrélateur 131 effectue la corrélation du signal reçu de l'amplificateur 3 avec le code 130. Cette corrélation lui permet de synchroniser l'horloge 5 avec la fréquence d'échantillonnage du signal à l'émission. Ensuite, le corrélateur 131 effectue un décalage du code 130 par rapport au signal reçu de l'amplificateur 3 jusqu'à obtenir une corrélation maximale qui donnera la synchronisation de la modulation de phase. Dans un exemple de réalisation, l'horloge 5 permet de délivrer au dispositif de démodulation de phase 20 deux fréquences par exemple la fréquence de 100 MHz, permettant d'affecter diverses valeurs à la phase et la fréquence de 10 MHz, correspondant à la fréquence d'échantillonnage du signal. Dans ce cas, la phase peut obtenir 21 valeurs. Dans l'exemple non limitatif la fréquence de 10 MHz correspond exactement à la moitié des normes de production d'images vidéo 4.2.2.

L'utilisation d'un amplificateur fréquence intermédiaire 3 à limiteur permet de simplifier la construction du récepteur.

Dans une variante de réalisation du dispositif selon l'invention l'horloge 5 est susceptible de fournir en plus une fréquence, double de la fréquence d'échantillonnage. Ainsi il serait possible (d'émettre et) de recevoir un débit d'information double. Les informations supplémentaires pouvant servir soit à (émettre et) recevoir une seconde chaîne de télévision soit à obtenir une image de haute définition. Il est a noté qu'un simple changement de fréquence d'horloge permet de passer de la télévision normale à un doublement de chaînes disponibles ou à la télévision à haute définition.

Le démodulateur de phase fait correspondre un signal numérique reçu en modulation de phase de valeur numérique qui permettront après leur conversion en des valeurs analogiques par des convertisseurs numériques-analogiques 16 d'attaquer des canons à électrons ou des amplificateurs audiophoniques. Par exemple le démodulateur de phase 20 est connecté à trois premiers convertisseurs numériques-analogiques 16 connectés à trois canons électrons d'un tube rayon cathodique couleur 17. Un quatrième convertisseur numérique-analogique 16 est par exemple connecté à un amplificateur audiophonique 3 lui-même relié à un haut-parleur 18. Ainsi on obtient une image et un son correspondant au programme de télévision transmis.

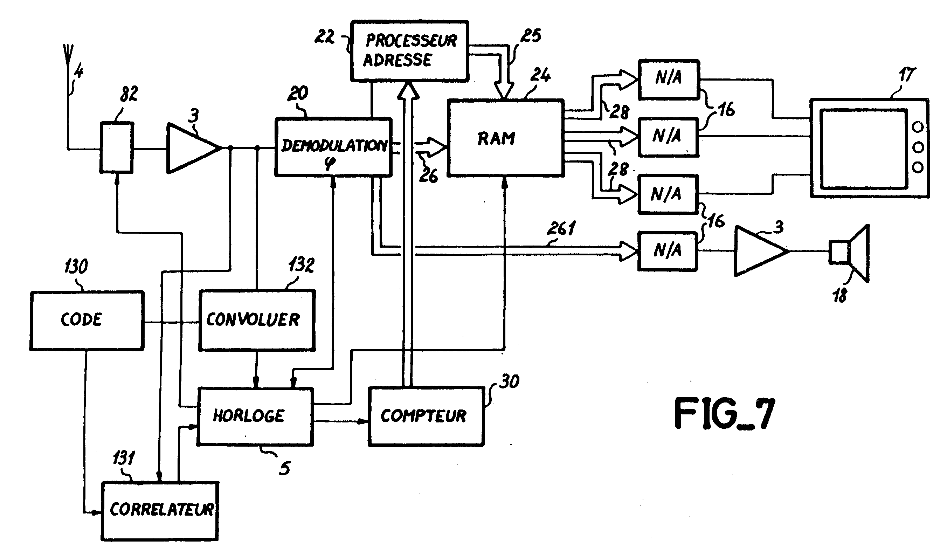

Sur la figure 7, on peut voir une variante de réalisation d'un récepteur de télévision selon l'invention. Le dispositif de la figure 7 comporte, connectés en série, une antenne 4, un dispositif de changement de fréquence 82, un amplificateur fréquence intermédiaire 3, un dispositif de démodulation de phase 20, un bus 26, une mémoire vive vidéo 24 (RAM en terminologie anglo-saxonne), des convertisseurs analogiques-numériques 16, un tube couleur à rayon cathodique 17. Le dispositif de démodulation de phase 20 est relié d'autre part par un bus 261, un convertisseur numérique-analogique 16, un amplificateur audiophonique 3, et un haut-parleur 18. A la sortie de l'amplificateur fréquence intermédiaire 3 sont connectés, d'une part un corrélateur 131, d'autre part un convolueur 132 relié à une horloge 5. Un générateur de code pseudo-aléatoire 130 est relié au convolueur 132 et au corrélateur 131. L'horloge 5 est relié au dispositif de démodulation de phase 20, à la mémoire vidéo 24 et à un compteur 30. Le compteur 30 est relié à un processeur d'adresse 22 de la mémoire vidéo 24. D'autre part le dispositif de démodulation de phase 20 est relié au processeur d'adresse 22. Le processeur d'adresse 22 est relié par un bus d'adresse 25 à la mémoire vive vidéo 24.

L'horloge 5 comporte par exemple un oscillateur à quartz. Dans la variante de réalisation nécessitant une grande précision permettant d'espacer les synchronisations d'horloges d'émission et de réception, on utilise des horloges atomiques.

Le processeur d'adresse 22 associé au compteur 30 permet de générer des adresses transmises à mémoire vidéo 24 par le bus 25 permettant au dispositif de démodulation de phase 20 d'écrire des modifications d'une image qui est déjà stockée. Ainsi, il est possible d'augmenter la définition de la télévision. Une fois qu'une image vidéo a été stockée dans la mémoire 24 il est possible de recevoir principalement les informations destinées à modifier cette image au fur et à mesure de son évolution par suite d'un mouvement à l'écran. Ces informations sur la modification de l'image peuvent se rapporter à des points de l'image ou à des éléments d'image comportant une pluralité de points.

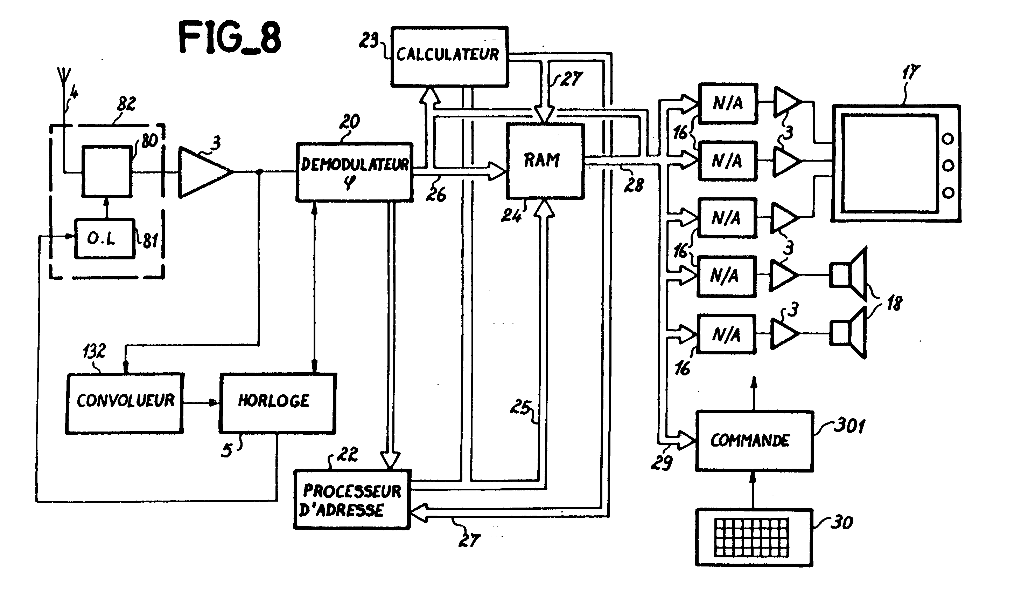

Sur la figure 8, on peut voir un dispositif de réception d'image de télévision particulièrement perfectionné. Ce dispositif permet de recevoir des images de télévision haute définition ainsi que d'effectuer les calculs permettant de s'affranchir de l'influence des échos multiples.

Le dispositif de réception comporte, connectés en série, une antenne 4, un dispositif de changement de fréquence 82, un amplificateur fréquence intermédiaire 3, un dispositif de démodulation de phase 20, une mémoire vidéo 24, des convertisseurs numériques-analogiques 16, des amplificateurs 3, un tube à rayon cathodique 17 ou des haut-parleurs 18. La sortie de l'amplificateur fréquence intermédiaire 3 est connectée au convolueur 123. Le convolueur 123 est connecté à une horloge 5. L'horloge 5 est connectée au dispositif de démodulation de phase 20. Le dispositif de démodulation de phase 20 est connecté par un bus à un processeur d'adresse 22. Le bus d'adresse 25 permet de relier un calculateur 23 et le processeur d'adresse 22 à la mémoire vidéo 24. Un bus de donnée 26 permet de relier le dispositif de démodulation 20, le calculateur 23 à l'entrée ou à la sortie de la mémoire vidéo 24. Le bus de sortie 28 de la mémoire vidéo 24 est relié en parallèle à par exemple cinq convertisseurs numériques-analogiques 16 ainsi qu'à une connexion numérique extérieure 29. Les trois premiers convertisseurs numériques-analogiques 16 sont reliés à trois amplificateurs 3 permettant d'attaquer trois canons à électron d'un tube à rayons cathodique 17. Les amplificateurs 3 permettent d'adapter les niveaux de sortie des convertisseurs numériques-analogiques au niveau de fonctionnement optimal du tube 17. Il est bien entendu que l'utilisation d'un tube 17 à rayon cathodique monochrome ne sort pas du cadre de la présente invention. Dans ce cas on utilise, pour obtenir l'image, un convertisseur numérique-analogique 16 unique. Deux convertisseurs numériques-analogiques 16 sont reliés à travers des amplificateurs audiophoniques 3 à des haut-parleurs 18. L'utilisation de deux voies audiophoniques séparées permet d'obtenir la stéréophonie ou d'obtenir simultanément des textes différents. Cela peut être par exemple utilisé pour recevoir simultanément une émission de télévision avec le son en plusieurs langues. Il est bien entendu que l'utilisation d'un nombre de voies supérieures ne sort pas du cadre de la présente invention.

Le bus 29 permet de recevoir des données numériques, il peut servir notamment à faire apparaître sur l'écran des inscriptions alphanumériques comme des sous-titres à transmettre des données ou des programmes vers des micro-ordinateurs ou faire imprimer des renseignements souhaités sur une imprimante. De plus, le bus 29 permet de recevoir des signaux de commande permettant par exemple la télécommande par voie radio, ainsi il est possible de programmer sur un dispositif de commande 301 par exemple au moyen d'un clavier 302 la mise en marche automatique par exemple du récepteur de télévision ou d'un magnétoscope au début d'une émission.

L'utilisation de la corrélation seule, pour effectuer la synchronisation de l'horloge de réception 5 avec l'horloge d'émission, permet une simplification de réalisation du dispositif selon l'invention. Toutefois elle présente l'inconvénient de diminuer le débit d'information susceptible d'être transmis.

Le calculateur 23 permet d'obtenir une télévision à haute définition et/ou d'éliminer les échos multiples. Un procédé de transmission d'image de télévision à haute définition a été décrit par le brevet français N° 82 11209.

L'antenne 4 reçoit non seulement le signal direct émis par l'émetteur mais aussi les signaux réfléchis. Ces signaux ont suivi un trajet différent de celui suivi par le signal direct. Ainsi il présente un retard par rapport au signal direct. Ce retard se traduit par une différence de phase. Mais la réflection n'est pas totale, ainsi le signal réfléchi ne présente pas la même amplitude que le signal direct. Le signal total reçu à chaque instant est la superposition du signal direct avec les signaux réfléchis. Ainsi à un instant $t_i$ on reçoit un signal $Y_i$. $t_i - t_{i-1} = 1/f_e$, $f_e$ étant la fréquence d'échantillonnage, par exemple 10 MHz.

A un Instant $Y_n$ on reçoit un signal :

$$
\begin{aligned}
Y_n &= a_0\, S_0 + a_1\, S_1 + a_2\, S_2 + \ldots + a_n\, S_n \\
Y_{n+1} &= a_0\, S_1 + a_1\, S_2 + a_2\, S_3 + \ldots + a_n\, S_{n+1} \\
Y_{n+2} &= a_0\, S_2 + a_1\, S_3 + a_2\, S_4 + \ldots + a_n\, S_{n+2} \\
Y_{n+3} &= a_0\, S_3 + a_1\, S_4 + a_2\, S_5 + \ldots + a_n\, S_{n+3}
\end{aligned}
$$

$$\cdot$$
$$\cdot$$
$$\cdot$$

$$
Y_{n+p} = a_0\, S_p + a_1\, S_{p+1} + \ldots + a_n\, S_{p+n}
$$

$a_1$ représente l'amplitude complexe du premier signal réfléchi, $a_2$ du deuxième signal réfléchi, $a_3$ du troisième signal réfléchi ainsi de suite. $a_n$ représente l'amplitude du signal direct. On peut normer le signal en posant $a_n = 1$. Nous voyons que nous obtenons à la réception, un système d'équation où au bout d'un temps suffisamment long il est possible d'obtenir plus d'équations que d'inconnus. Les calculateurs 23 éliminent les inconnus du système. Une fois connu le coefficient du système d'équation, le calculateur 23 effectue des corrections dans la mémoire vidéo 24 en apportant le retard nécessaire pour corriger l'influence des signaux réfléchis sur le signal reçu.

Avantageusement à l'émission on interrompt le signal par des blancs permettent à la réception de faciliter l'analyse des échos multiples afin de mieux les éliminer.

On peut généraliser pour un signal d'émission x(t) continu, sans que la fréquence d'échantillonnage soit nécessairement constante.

On capte un signal y(t)

$$y(t) = x(t) * h(t) \qquad (1)$$

* étant le produit de convolution et h(t) la fonction de transfert de l'espace entre l'émetteur et le récepteur.

En l'absence d'écho parasite :

$$h(t) = a_0\, \delta\, (t - t_0)$$

étant la fonction de Dirac $a_0$ l'amplitude du signal reçu et $t_0$ le temps d'arrivée au récepteur du signal. En présence d'échos multiples, la fonction de transfert h(t) devient :

$$h(t) = \Sigma_i \, a_i \, \delta(t - t_i)$$

Pour s'affranchir des échos parasites il est nécessaire d'éliminer dans h(t) :

$$\sum_{i \neq o} a_i \, \delta(t - t_i)$$

Prenons la transformée de Fourier de l'équation (1) :

$$Y(f) = X(f) \, . \, H(f)$$

Y(f) étant la transformée de Fourier de y(t), X(f) la transformée de Fourier de x(t) et H(f) la transformée de Fourier de h(t).

Soit $\rho_{yx}(\tau)$ la fonction d'intercorrélation de y et de x :

$$\rho_{yx}(\tau) = <y|x>_\tau = \int y(t) \, \overline{x(t+\tau)} d\tau$$

Or à la réception on connaît le codage x(t) utilisé à l'émission.

Soit $\phi_{yx}(f)$ la transformée de Fourier de $\rho_{yx}(\tau)$

$$\phi_{yx}(f) = Y(f) \, . \, \overline{X(f)}$$
$$\phi yx(f) = H(f) \, . \, |X(f)|^2$$
$$\phi_{yx}(f) = H(f) \, . \, \phi_{xx}(f)$$

donc :

$$H(f) = \frac{\phi_{yx}(f)}{\phi_{xx}(f)}$$

Soit

$$G(f) = \frac{1}{H(f)}$$

et g(t) la transformée de Fourier inverse de G(f)

$$g(t) = TF^{-1} \left( \frac{1}{TF(h(t))} \right)$$

g(t) est la fonction de transfert d'un filtre qui supprime les échos multiples.

Avantageusement, le filtre dont la fonction de transfert est g(t) est un filtre numérique programmable.

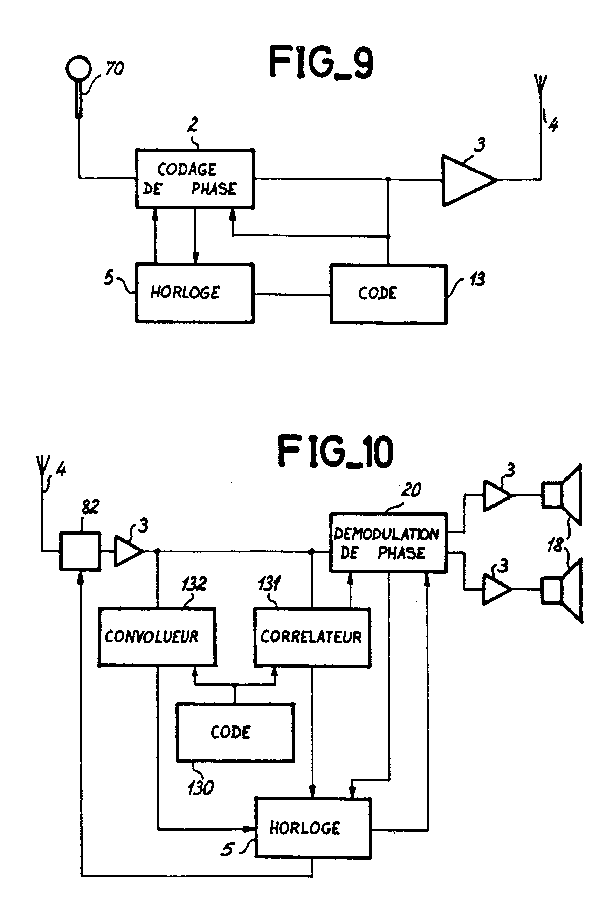

Sur la figure 9, on peut voir un exemple de réalisation d'un dispositif d'émission radiophonique selon l'invention. Le dispositif d'émission comporte, connectés en série, une source des signaux audiophoniques 70, un dispositif de phase 2, un amplificateur 3, et une antenne 4. Le dispositif de codage de phase 2 est relié à une horloge 5 de grande précision. D'autre part l'horloge 5 est reliée à un dispositif 13 générateur de code pseudo-aléatoire. Le dispositif 13 générateur de code pseudo-aléatoire est relié à l'entrée de l'amplificateur 3.

Dans une variante de réalisation on utilise des codes réguliers comme par exemple :

0, Π, 0, Π, 0, Π, ...

ou 0, $\frac{\pi}{2}$, 0, Π, 0, $\frac{\pi}{2}$, 0, Π, 0 ...

ou 0, Π, Π, 0, Π, Π, 0, Π, Π, 0, Π, Π, ...

Les émissions sonores devant être continues, on ne dispose pas, comme en télévision, de temps correspondant au retour ligne et/ou retour trame, pendant lequel on peut, sans dégrader la qualité, transmettre les données des services et notamment les données permettant la synchronisation des horloges d'émission et de réception. Ainsi pour les émissions radiophoniques on superposera systématiquement le code choisi au codage de phase du signal audiophonique. Le dispositif 13 de génération de code par exemple pseudo-aléatoire permet au dispositif de codage de phase de moduler selon ledit code le signal audiophonique modulé en phase. La source du signal audiophonique 70 est par exemple un microphone, un magnétophone ou une régie.

Avantageusement on transmet par exemple en multiplexage plusieurs voies audiophoniques indépendantes permettant d'obtenir la stéréphonie ou la quadriphonie.

Toutefois dans le dispositif selon l'invention on rend indépendant le canal de transmission du signal transmis.

Ainsi, il est aussi possible au contraire de transmettre le signal, même monophonique sur une pluralité de canaux, par exemple sur les fréquences adjacentes. Le choix du nombre de canaux utilisé dépend du débit d'informations à transmettre divisé par le débit d'informations susceptibles d'être transmises par un canal.

Sur la figure 10, on peut voir un exemple de réalisation d'un dispositif de réception d'émission radiophonique selon l'invention. Ledit dispositif comporte, connectés en série une antenne 4, un dispositif de changement de fréquence 82, un amplificateur fréquence intermédiaire 3, un dispositif de démodulation de phase 20, des amplificateurs audiophoniques 3, des haut-parleurs 18. L'horloge 5 est connectée au dispositif de changement de fréquence 82. A la sortie de l'amplificateur fréquence intermédiaire 3 sont connectés un convolueur 132 et un corrélateur 131. Le convolueur 132 et le corrélateur 131 reçoivent un code pseudo-aléatoire engendré par un générateur de code pseudo-aléatoire 130. Le convolueur 132 et le corrélateur 131 sont connectés à une horloge 5. L'horloge 5 est connectée au dispositif de démodulation de phase 20.

Dans l'exemple illustré sur la figure 10 le récepteur étant stéréophonique il comporte deux voies symbolisées par deux amplificateurs audiophoniques 3 et deux haut-parleurs 18.

La liaison bidirectionnelle entre le démodulateur de phase 20 et l'horloge 5 permet l'asservissement de la démodulation à la synchronisation d'horloge et la synchronisation de l'horloge selon le résultat de la démodulation.

Le convolueur 132 présente l'avantage d'une construction très simple, il permet une première synchronisation de l'horloge 5. Le corrélateur 131 assure la synchronisation fine de l'horloge 5 permettant la comparaison de phase des signaux reçus. L'exemple de réalisation illustré sur la figure 10 est analogique. Il est bien entendu que les récepteurs radiophoniques numériques ne sortent pas du cadre de la présente invention.

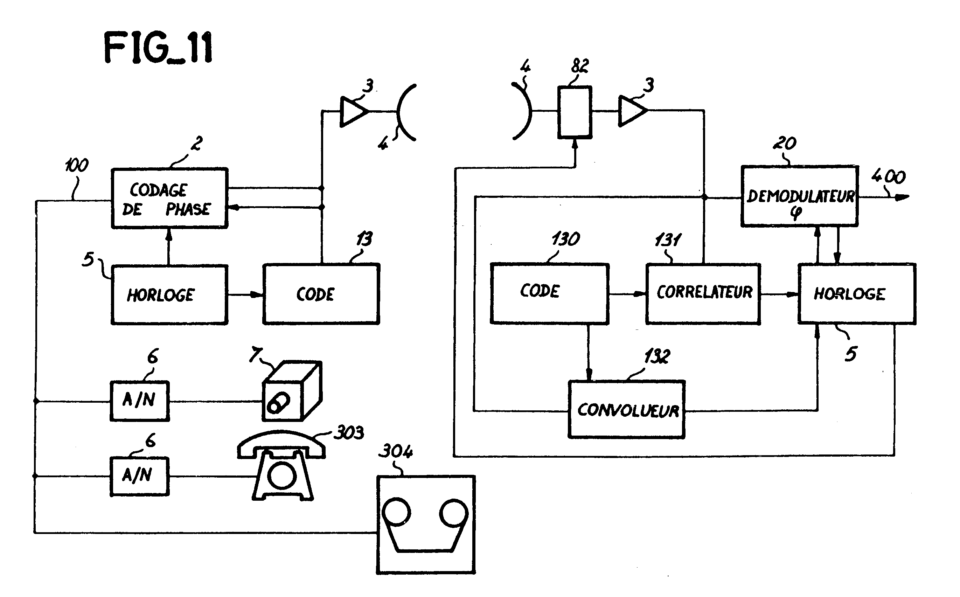

Sur la figure 11, on peut voir un dispositif de transmission des données selon l'invention. Le dispositif comporte un ensemble d'émission ainsi qu'un ensemble de réception.

Le dispositif d'émission comporte connectés en série un dispositif de codage de phase 2, un amplificateur 3 et une antenne d'émission 4. Une horloge de grande précision 5 est connectée d'une part au dispositif de codage de phase 2 qui comporte un oscillateur générateur de la fréquence porteuse, et d'autre part à un générateur 13 de code par exemple pseudo-aléatoire. Le générateur de code pseudo-aléatoire 13 est connecté au dispositif de codage de phase 2 et/ou directement à l'entrée de l'amplificateur 3. Le dispositif de codage de phase 2 reçoit des données numériques sur la ligne 100, par exemple, des émissions de télévision provenant des caméras de télévision 7, des lignes téléphoniques 303 ou des données informatiques provenant d'ordinateurs 304.

Le dispositif de réception comporte connectés en série une antenne 4, un dispositif de changement de fréquence 82 accroché à l'horloge 5, un amplificateur fréquence intermédiaire 3, un dispositif de démodulation de phase 20. A la sortie de l'amplificateur 3 sont connectés en parallèle un corrélateur 131 et/ou un convolueur 132. D'autre part le corrélateur 131 et/ou le convolueur 132 sont connectés à un générateur de code pseudo-aléatoire 130. Le corrélateur 131 et/ou le convolueur 132 sont connectés a l'entrée d'une horloge 5. L'horloge 5 est connectée au dispositif de démodulation de phase 20.

Le dispositif de codage de phase 2 reçoit sur la ligne 100 les informations à transmettre. Il effectue le codage de phase synchronisée par l'horloge 5. L'horloge 5 assure aussi la synchronisation de l'émission d'un code pseudo-aléatoire 13. Le code pseudo-aléatoire engendré par le générateur 13 est émis en alternance avec le signal modulé par le dispositif de codage de phase 2, soit il permet de moduler en phase le signal à transmettre.

Dans une variante de réalisation du dispositif selon l'invention une partie du code est émise pendant l'arrêt des transmissions du signal utile. Cette partie permet une première synchronisation des horloges, la synchronisation fine étant obtenue a partir de la modulation du signal transmis.

L'amplificateur 3 amplifie le signal à émettre. L'antenne 4 émet le signal.

A la réception l'antenne 4 capte le signal transmis. Le dispositif 82 effectue une réduction de fréquence du signal par exemple en effectuant des battements du signal reçu avec un oscillateur local 81 accroché sur l'horloge 5. L'amplificateur à fréquence intermédiaire 3 amplifie le signal dont la fréquence a été réduite. Le corrélateur 131 et/ou le convolueur 132 effectuent respectivement la corrélation et/ou la convolution du signal reçu par un code engendré par un générateur de code pseudo-aléatoire 130. Le signal de la corrélation de la convolution permet la synchronisation de l'horloge de réceptions avec l'horloge d'émission 5. Une fois les horloges synchronisées le dispositif de démodulation de phase 20 permet d'obtenir un signal numérique sur la ligne 400. Avantageusement, on associe un dispositif d'élimination d'échos multiples. Ce dispositif fonctionne de manière analogue à celui utilisé en télévision.

Avantageusement le dispositif d'émission et/ou de réception comporte une régie 8.

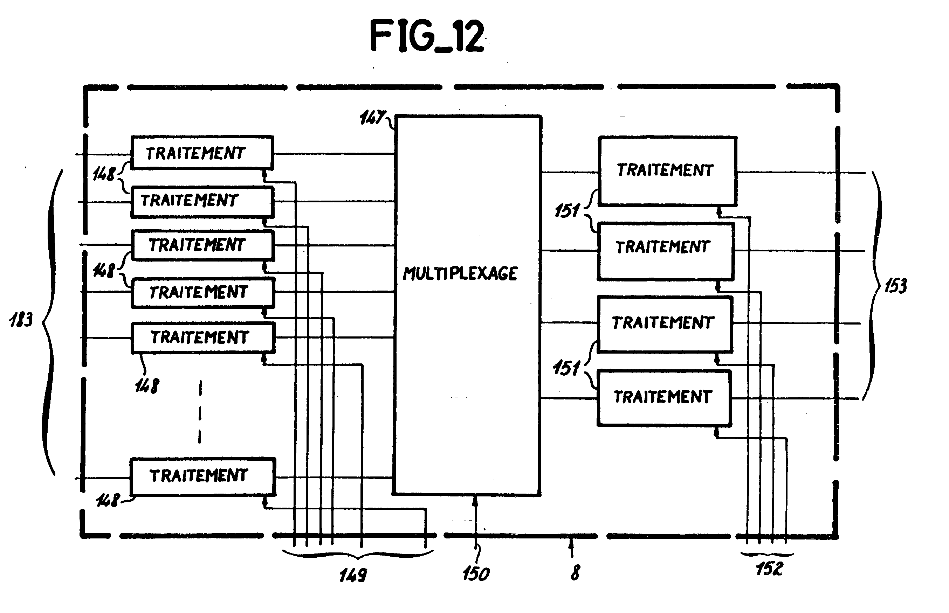

Sur la figure 12, on peut voir un exemple de réalisation de régie 8 permettant d'utiliser les avantages du dispositif selon l'invention.

La régie 8 comporte une pluralité de lignes 183 d'entrée connectées à des premières unités de traitement 148, une unité de mixage et multiplexage 147, des secondes unités de traitement 151 et des lignes de sortie 153.

Les unités de traitement 148 sont connectées à des lignes de commande 149. L'unité de mixage et multiplexage 147 est connectée à une ligne de commande 150.

Les unités de traitement 151 sont connectées à des lignes 152.

Les unités 148 reçoivent sur les lignes 183 les signaux à traiter. Les unités de traitement 148 effectuent le traitement individuel des signaux reçus. Par exemple, pour les images vidéo les unités de traitement 148 peuvent effectuer sur commande les variations géométriques de l'image ou des modifications de couleurs.

L'unité de mixage et multiplexage 147 permet d'obtenir des images à émettre à partir d'une pluralité d'images en les superposant et/ou en assignant à chaque image une partie de l'écran.

De plus, l'unité de mixage et de multiplexage répartie les données à transmettre entre les canaux de transmission disponibles. Dans l'exemple illustré sur la figure 12, l'unité de mixage et de multiplexage 147 peut répartir les informations à transmettre entre quatre canaux physiques. Ainsi, le débit de transmission n'est plus limité par le débit d'un canal. A la réception on reconstitue l'information à partir des quatre canaux. Ce dispositif présente une extrême souplesse. On peut aussi bien répartir un signal vidéo entre, par exemple, quatre canaux, qu'émettre dans un canal unique le signal vidéo, le signal son, des informations de service ainsi que des données alphanumériques.

Avantageusement, les signaux de service indiquent au récepteur la répartition des informations dans divers canaux.

Les unités de traitement 151 permettent d'effectuer des modifications sur le signal devant être émis. Le traitement numérique permet d'effectuer séparément des modifications sur par exemple la partie son et la partie vidéo du signal.

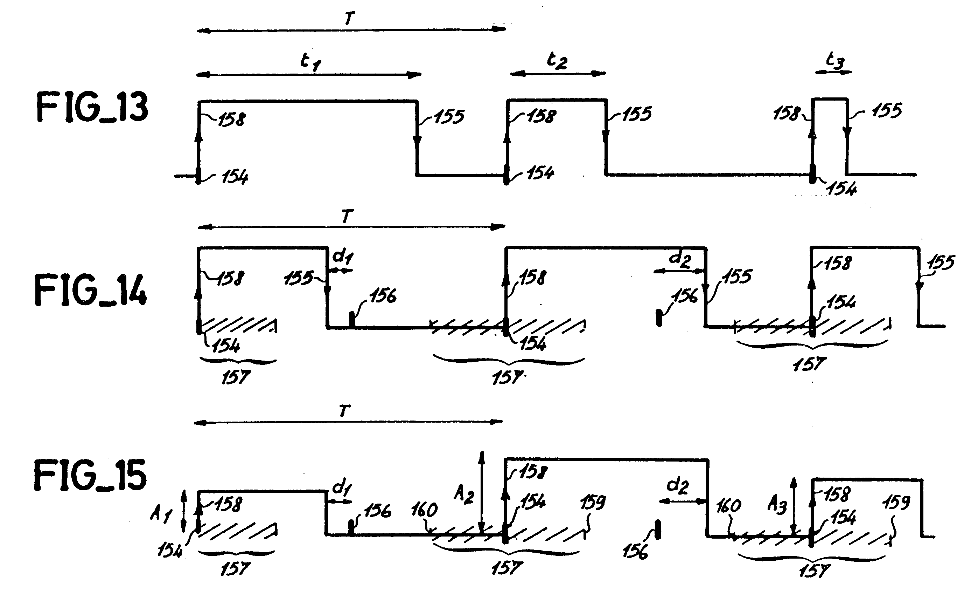

Sur la figure 13, on peut voir un chronogramme illustrant une modulation susceptible d'être utilisée dans le dispositif selon l'invention. Ladite modulation permet les transmissions notamment numériques, chaque mot étant transmis dans une période T comprise entre des instants 154 répartis régulièrement dans le temps. Aux instants 154 est effectuée une transition 158, par exemple une transition de phase de π. Une seconde transition 155 est effectuée dans la période T. L'instant où a lieu la transition 155 détermine la valeur numérique ou l'information analogique transmise. Dans l'exemple illustré sur la figure 13 on transmet trois valeurs $t_1$, $t_2$ et $t_3$ correspondant au temps écoulé entre la transition 158 et la transition 155.

Sur la figure 14, on peut voir un exemple de modulation permettant de limiter la bande passante nécessaire aux transmissions. Dans cette variante de réalisation les instants 154 des transitions 158 sont précédés et suivis par des intervalles de temps 157 pendant lesquels on s'interdit d'avoir une transition 155. Ainsi on évite d'avoir à transmettre deux transitions 158, 155 trop rapprochées dont le spectre de fréquence est très large.

Pour un intervalle de temps 157 pendant lequel on s'interdit d'avoir une transition 155 égale à T/4 l'énergie comprise dans l'harmonique d'ordre 1 est égale à 40,5% de l'énergie totale.

Avantageusement, la durée de l'intervalle 157 est égale à T/2. Dans ce cas, 81,1% de l'énergie totale se trouve dans l'harmonique d'ordre 1. La valeur T/2 pour l'intervalle 157 est proche de la valeur optimale permettant de minimiser les lobes secondaires (harmonique d'ordre supérieur). Ces valeurs ont été calculées pour des signaux parfaitement carrés, c'est-à-dire pour des passages quasi instantanés de 0 à π et de π à 0.

Dans l'exemple illustré sur la figure 14 on transmet deux valeurs $d_1$, $d_2$ correspondant au temps séparant la transition 155 du milieu 156 de l'intervalle T. Dans l'exemple illustré $d_1$ est un nombre négatif,

$d_2$ étant positif.

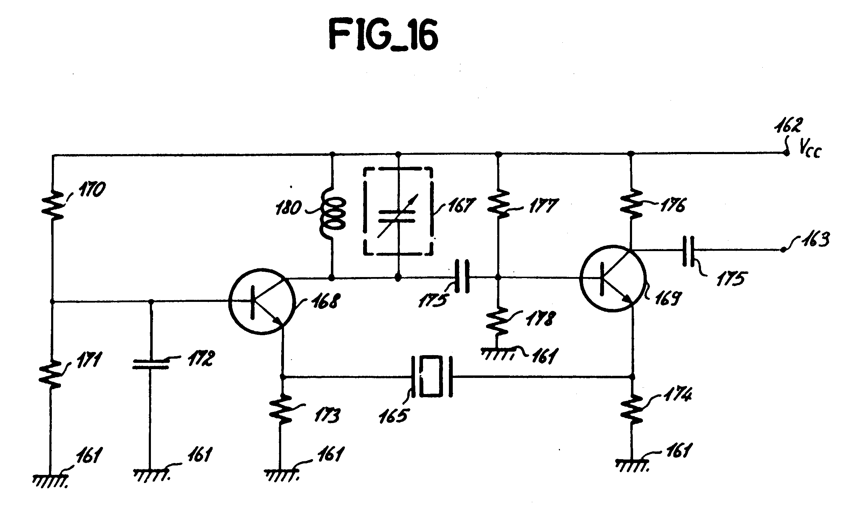

Sur la figure 15, on peut voir un exemple de modulation comportant deux modulations orthogonales c'est-à-dire indépendantes entre elles. On utilise en plus d'une modulation analogue à celle illustrée sur la figure 14 une modulation d'amplitude. Ainsi en plus des informations transmises en modulation de phase il est possible de transmettre des informations $A_1$, $A_2$, $A_3$ en modulation d'amplitude. Toutefois il est impératif que l'amplitude transmise ne soit pas inférieure à un seuil nécessaire à la mesure des temps t (figure 13) ou d (figures 14 et 15). L'utilisation de la modulation d'amplitude associée par exemple à une modulation de phase permet de diminuer la précision de la détection de la phase et de l'amplitude pour un débit d'information donné et/ou d'augmenter le débit d'informations susceptibles d'être transmises.

Sur la figure 16, on peut voir un exemple de réalisation d'oscillateur à quartz susceptible de servir de base de temps aux horloges mises en oeuvre dans le dispositif selon l'invention.

L'oscillateur comporte un cristal de quartz 165 connecté entre les collecteurs de deux transistors 168 et 169. D'autre part, les émetteurs des transistors 168 et 169 sont reliés à la masse 161 par l'intermédiaire de résistances respectivement 173 et 174. La base du transistor 168 est reliée au condensateur 172, et aux résistances 171 et 170. Le condensateur 172 et la résistance 171 sont reliés à la masse 161. Les résistances 170, 177 et 176, la self induction 180 ainsi qu'une capacité variable 167 sont reliées à la borne 162. La borne 162 est reliée à l'alimentation électrique et est portée par exemple au potentiel 12V. La résistance 177 ainsi qu'une résistance 178 sont reliées à la base du transistor 169. D'autre part la résistance 178 est reliée à la masse 161.

La self induction 180 ainsi que la capacité variable 167 sont reliées au collecteur du transistor 168. Le collecteur du transistor 168 est relié à travers un condensateur 179 à la base du transistor 169. La résistance 176 est reliée au collecteur du transistor 169. Le collecteur du transistor 169 est relié à travers un condensateur 175 à la borne de sortie 163.

La capacité variable 167 permet d'accorder la fréquence de résonance de l'oscillateur. La capacité variable 167 comporte par exemple un condensateur variable ou une batterie de condensateur commutable. Avantageusement, la capacité variable 167 comporte des diodes à capacité variable (Varicap) facilitant l'asservissement de l'oscillateur.

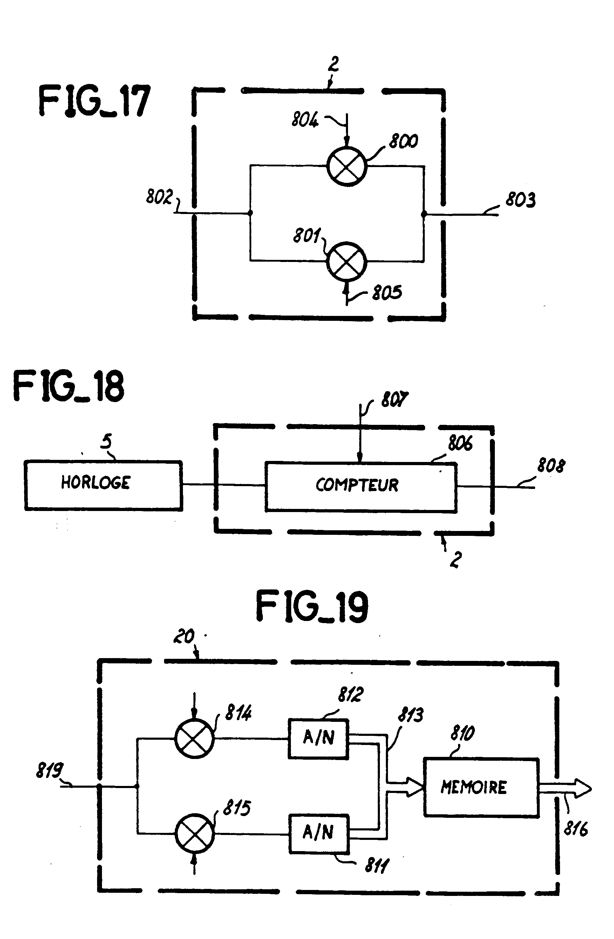

Sur la figure 17, on peut voir une exemple de codeur de phase 2. Le codeur de phase 2 comporte, placés en parallèle entre une entrée 802 et une sortie 803 deux duplexeurs 800 et 801.

L'entrée 802 du codeur de phase 2 est susceptible de recevoir la porteuse. Le duplexeur 800 est susceptible de mélanger le signal 804 avec la porteuse. Le duplexeur 801 est susceptible de mélanger le signal 805, identique au signal 804 mais déphasé de $\pi/2$, avec la porteuse. Les signaux de deux branches recombinées sont présents sur la sortie 803 du codeur de phase 2.

Avantageusement, pour des transmissions numériques on code la phase du signal avec un bruit de phase, l'écart type $\sigma$ est égal à deux fois le pas des quantification q :

$$\sigma = 2q$$

Sur la figure 18, on peut voir un codeur de phase numérique 2. Le codeur de phase 2 comporte un compteur 806 susceptible d'être remis à 0 par une commande 807. Avantageusement, le compteur 806 est un compteur binaire. Par exemple, la valeur décimale 128 ou 256 est suivie de la valeur 0. Le compteur 806 est relié à une horloge 5.

A chaque impulsion d'horloge le compteur 806 délivre un signal, par exemple un signal carré. Ainsi, si à l'instant $t_0$ on force le compteur 806 à passer à la valeur 0 il va, à cet instant, générer sur sa sortie 808 le début d'un signal carré. Ainsi la phase du signal sera modifiée. Pour obtenir une modulation de phase du signal il suffit d'agir sur la commande 807 du compteur 806. Le signal modulé présent sur la sortie 808 du dispositif de codage de phase 2 peut être mis sur une porteuse.

Dans une variante de réalisation du dispositif selon l'invention la fréquence de l'horloge 5 est supérieure à la fréquence de la porteuse. Par exemple, la fréquence de l'horloge est égale à 4096 fois la fréquence de la porteuse, le compteur 806 étant un compteur de valeur maximale 128. Ainsi, à chaque période de la porteuse on transmet un nombre de cinq bits. Ainsi on se trouve à la limite de la modulation de phase et de la modulation de fréquence.

Sur la figure 19, on peut voir un dispositif 20 de décodage de phase. Le dispositif 20 comporte deux branches comportant chacune un duplexeur 814 et 815 relié à un convertisseur analogique-numérique respectivement 812 et 811. Les convertisseurs analogiques-numériques 811 et 812 sont reliés par un bus 813 à un dispositif 810 permettant de calculer la phase. La valeur numérique de la phase est émise par le dispositif 810 sur un bus 816.

Les duplexeurs 814 et 815 reçoivent des signaux dont le déphasage relatif est égal à $\pi/2$. Ainsi, les

duplexeurs 814 et 815 sont susceptibles d'extraire la partie réelle et imaginaire du signal.

Les convertisseurs analogiques-numériques 812, 811 convertissent les sinus et les cosinus de la phase du signal en leurs valeurs numériques. Le dispositif 810 associe au couple (sinus, cosinus) l'angle de phase.

Dans une première variante de réalisation du dispositif selon l'invention le dispositif 810 est un calculateur.

Avantageusement, le dispositif 810 est une mémoire permanente. Dans ce cas, le bus 813 est un bus d'adresse de ladite mémoire, le bus 816 étant un bus de données.

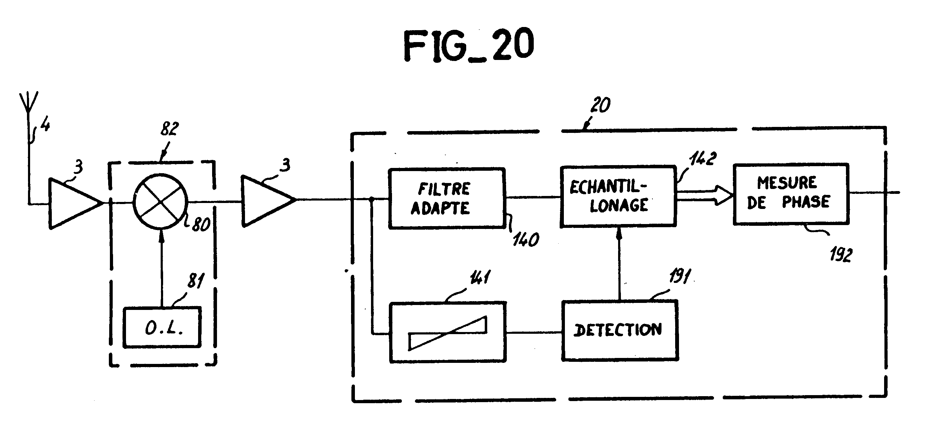

Sur la figure 20, on peut voir un exemple de réalisation d'un dispositif 20 permettant de mesurer successivement la phase des divers échantillons de signal.

Le dispositif 20 comporte connectés en série un filtre adapté 140, un échantillonneur numérique 142 et un dispositif de mesure de phase 192. Un filtre impair 141 est connecté à l'entrée du filtre adapté 140. La sortie du filtre impair 141 est connectée à l'entrée d'un dispositif de détection de phase 191. Le dispositif de détection de phase 191 commande le dispositif d'échantillonnage 142. Le dispositif de détection 191 est par exemple un trigger de Schmit.

La dispositif de mesure de phase 192 est par exemple un comparateur de phase comparant la phase du signal reçu avec une phase de référence.

Dans une variante de réalisation analogique du dispositif selon l'invention les filtres adaptés 140 et les filtres impairs 141 sont par exemple réalisés sous forme du dispositif à ondes acoustiques de surface.

Dans une seconde variante de réalisation du dispositif selon l'invention les filtres adaptés 140 et les filtres impairs 141 sont des filtres numériques.

Dans l'exemple illustré sur la figure 20 le dispositif selon l'invention est connecté à un dispositif de réception d'ondes modulées en phase. Les ondes modulées en phase transmettent par exemple les émissions de télévision, des émissions radiophoniques, des instructions de commande ou des données alphanumériques. Dans un exemple illustré sur la figure 20 le dispositif de réception comporte connectés en série une antenne de réception 4, un amplificateur hyperfréquence 3, un dispositif de réduction de fréquence 82, un amplificateur fréquence intermédiaire 3. Le dispositif de réduction de fréquence 82 comporte par exemple un duplexeur 80 raccordé d'une part à l'amplificateur hyperfréquence 3 et d'autre part à un oscillateur local 81.

Dans une variante simplifiée de réalisation du dispositif selon l'invention le dispositif de détection 191 commande directement le dispositif de mesure de phase 192.

Lors du passage par 0 du signal ayant traversé le filtre impair 141 le dispositif de détection envoie un signal de commande permettant l'échantillonnage du signal. Lors de la réalisation du dispositif 20 selon l'invention on prend bien soin que les retards induits dans la branche comportant le filtre adapté 140 et l'échantillonneur 142 soient compensés par le retard induit dans la branche comportant le filtre impair 141 et le dispositif de détection 191.

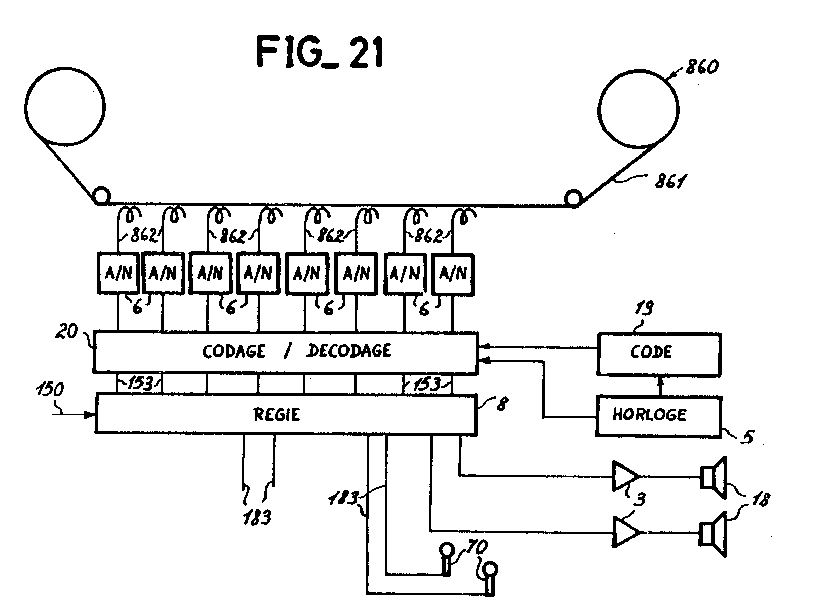

Sur la figure 21, on peut voir un exemple de réalisation d un enregistreur et/ou lecteur selon l'invention. Sur l'exemple, non limitatif, de la figure 21 l'enregistreur est un enregistreur magnétique à bandes 861. Il est bien entendu que le principe de l'invention s'applique aussi à d'autres types d'enregistreurs et/ou lecteurs comme par exemple les enregistreurs et/ou lecteurs optiques ou mécaniques. De même, des enregistreurs et/ou lecteurs utilisant d'autres supports magnétiques que la bande, comme par exemple des disquettes magnétiques ne sortent pas du cadre de la présente invention.

Un mécanisme 860 assure un défilement régulier de la bande magnétique devant une pluralité de têtes magnétiques 862. L'exemple illustré sur la figure 21 est un magnétophone comportant huit têtes d'enregistrement/lecture. Les têtes d'effacement ne sont pas représentées. Il est bien entendu possible de remplacer chaque tête 862 d'enregistrement/lecteur par une paire de têtes d'enregistrement et tête de lecture. Chaque tête 862 est reliée dans l'exemple de réalisation numérique du magnétophone à un convertisseur 6. Les convertisseurs 6 sont reliés à un dispositif 20 de codage/décodage du signal par les lignes 153. Le dispositif 20 de codage/décodage est connecté à une régie 8. La régie 8 est reliée par des lignes 183 à des sources de signal à enregistrer, comme par exemple de microphones 70.

La régie 8 est reliée par l'intermédiaire d'amplificateur 3 à des haut-parleurs 18. Le régie 8 reçoit un signal de commande 150 permettant d'effectuer les réglages du magnétophone.

Une horloge 5 est connectée d'une part à un générateur de code 13 et d'autre part au dispositif 20 de codage/décodage.

A l'enregistrement : la régie 8 répartit les informations à stocker entre les pistes d'enregistrement et effectuer les traitements préalables du signal. Avantageusement, la répartition du signal entre les pistes dépend de la qualité d'enregistrement désirée et de la vitesse de défilement de la bande. Le dispositif 20 de codage/décodage utilise par exemple la modulation illustrée sur la figure 14. Les convertisseurs 6

EP 0 286 665 B1

adaptent le signal numérique reçu à des amplitudes susceptibles d'être enregistrées sur la bande 861 par les têtes 862.

Le générateur de code 13 permet d'enregistrer sur la bande magnétique 861 un code, par exemple un code régulier 0, ¶, 0, ¶, 0, ¶, ... L'enregistrement de ce code permet à la lecture de synchroniser l'horloge 5.

L'enregistrement du code est soit superposé au signal soit intermittent avec une périodicité adaptée aux exigences de resynchronisation de l'horloge 5.

A la lecture : les têtes 862 génèrent à partir du signal stocké sur bande un signal électrique.

Avantageusement les convertisseurs 6 forme des signaux carrés dont les fronts correspondent aux transitions magnétiques sur la bande 861.

Le dispositif de décodage 20 fournit sur les lignes 153, les valeurs numériques du signal. Le régie 8 permet de reconstituer le signal utile à partir des divers canaux.

Dans l'exemple illustré sur la figure 21 on reconstitue deux signaux audiophoniques permettant d'obtenir un son stéréophonique. Dans ce cas, les signaux numériques sont convertis en signaux audio analogiques, les convertisseurs numérique-analogique sont par exemple compris dans la régie 8. Les signaux analogiques sont amplifiés par les amplificateurs 3 et convertis en ondes acoustiques par les haut-parleurs 18.

Avantageusement l'enregistreur selon l'invention comporte une mémoire non représentée permettant de stocker les informations, recueille à partir de la bande magnétique 861. La mémoire est relue périodiquement. Ainsi, on s'affranchit des variations de la vitesse de défilement de la bande magnétique.

Avantageusement, la régie 8 est susceptible de tenir compte du couplage magnétique entre les pistes adjacentes (diaphonie).

Il est par exemple possible de provoquer, par un shunt magnétique, un couplage magnétique connu entre les têtes 862 pour pouvoir mieux l'éliminer par le calcul.

L'invention s'applique notamment à la transmission et à l'enregistrement des données analogiques et/ou numériques par modulation de phase.

L'invention s'applique principalement à la transmission des programmes radiophoniques d'émission de télévision ou des données numériques.

**Revendications**

1. Procédé de transmission à modulation de phase d'informations utilisant un émetteur et au moins un récepteur, ledit émetteur et ledit récepteur comportant une horloge (5), caractérisé par le fait que ledit procédé comporte les étapes :
   - modulation en amplitude des informations codées en phase par un code pseudo-aléatoire de faible niveau, de grande longueur et émis en permanence, à l'émission ;
   - convolution et/ou corrélation à la réception du signal reçu avec ledit code ;
   - synchronisation de l'horloge (5) de réception avec un pic obtenu par la convolution ou par la corrélation du signal reçu par ledit code.

2. Procédé de transmission selon l'une quelconque des revendications précédentes, caractérisé par le fait que ledit procédé est un procédé de transmission d'émission de télévision numérique.

3. Procédé selon la revendication 2, caractérisé par le fait que ledit procédé permet de transmettre des informations nécessaires à la formation d'une image de télévision de définition moyenne ainsi que des informations complémentaires susceptibles après traitement d'améliorer la qualité de l'image.

4. Procédé selon l'une quelconque des revendications 1 à 3, caractérisé par le fait que ledit procédé est un procédé de transmission de données alpha-numériques.

5. Procédé selon la revendication 1, caractérisé par le fait que ledit procédé est un procédé radiophonique de transmission de sons.

6. Procédé selon l'une quelconque des revendications précédentes, caractérisé par le fait que l'on module le signal comportant des premières transitions (158) survenant aux instants (154) répartis régulièrement dans le temps et des secondes transitions (155), l'instant où surviennent lesdites secondes transitions (155) constituant le codage de l'information à transmettre.

16

**7.** Procédé selon l'une des revendications précédentes, caractérisé par le fait que l'amplitude du signal de modulation d'amplitude est telle que l'atténuation provoquée par ladite modulation d'amplitude empêche la réception des transitions (158 et 155).

**8.** Emetteur de rayonnement électromagnétique modulé comportant une antenne (4), un amplificateur (3), une source de signal à émettre (7), un dispositif de codage de phase (2) et une horloge (5), caractérisé par le fait qu'il comporte un dispositif générateur de code pseudo-aléatoire (13) relié à l'horloge et à des moyens de modulation d'amplitude (2 ou 3) pour moduler en amplitude à l'aide dudit code pseudo-aléatoire les signaux modulés en phase.

**9.** Emetteur selon la revendication 8, caractérisé par le fait qu'il comporte une régie (8) permettant de modifier et/ou de répartir les informations à transmettre entre une pluralité de canaux de transmission.

**10.** Emetteur selon la revendication 8 ou 9, caractérisé par le fait que ledit émetteur est un émetteur d'émissions de télévision.

**11.** Emetteur selon la revendication 8 ou 9, caractérisé par le fait que ledit émetteur est un émetteur d'émissions radiophoniques.

**12.** Récepteur d'ondes électromagnétiques coopérant avec un émetteur selon l'une des revendications 8 à 11, et comportant une antenne (4), un amplificateur (3), un démodulateur de phase (20), un oscillateur local (81) et une horloge (5) reliée à l'oscillateur local et au démodulateur de phase, caractérisé par le fait qu'il comporte un générateur de code pseudo-aléatoire (130) relié à des dispositifs (131, 132) effectuant la corrélation et/ou la convolution du signal de synchronisation obtenu par démodulation d'amplitude (3) du signal reçu avec le code engendré par ledit générateur de code (130), ces dispositifs (131, 132) étant reliés à l'amplificateur (3) et à l'horloge pour la synchroniser, l'horloge étant elle-même reliée au démodulateur de phase pour le synchroniser.

**13.** Récepteur selon la revendication 12, caractérisé par le fait que ledit récepteur est un récepteur d'émissions de télévision.

**14.** Récepteur selon la revendication 12 ou 13, caractérisé par le fait qu'il comporte une mémoire vive vidéo (24) et un processeur d'adresse (22) remplaçant dans ladite mémoire vive vidéo (24) des informations qui s'y trouvent par des nouvelles informations transmises.

**15.** Récepteur selon l'une des revendications 12 à 14, caractérisé par le fait qu'il comporte un calculateur (23) et une mémoire vive vidéo (24) pour stocker au moins une image, le calculateur étant susceptible de modifier tout ou partie de l'image stockée dans la mémoire vive vidéo d'après les informations reçues.

**16.** Récepteur selon la revendication 12 ou 13, caractérisé par le fait qu'il comporte un dispositif permettant, par le calcul, d'éliminer les échos multiples en les soustrayant au signal ou en les retardant de façon à les mettre en phase modulo 2π, avec le signal direct.

**17.** Récepteur selon la revendication 16, caractérisé par le fait qu'il comporte des processeurs pour éliminer les échos multiples en résolvant le système :

$$Y_n = a_0\, S_0 + a_1\, S_1 + a_2\, S_2 + \ldots + a_n\, S_n$$
$$Y_{n+1} = a_0\, S_1 + a_1\, S_2 + a_2\, S_3 + \ldots + a_n\, S_{n+1}$$
$$Y_{n+2} = a_0\, S_2 + a_1\, S_3 + a_2\, S_4 + \ldots + a_n\, S_{n+2}$$
$$Y_{n+3} = a_0\, S_3 + a_1\, S_4 + a_2\, S_5 + \ldots + a_n\, S_{n+3}$$

$$Y_{n+i} = a_0\, S_i + a_1\, S_{i+1} + a_2\, S_{i+1} + \ldots + a_4\, S_{n+i}$$

$$Y_{n+p} = a_0\, S_p + a_1\, S_{p+1} + \ldots + a_n\, S_{p+n}$$

$a_1$ représente l'amplitude complexe du premier signal réfléchi, $a_2$ du deuxième signal réfléchi, $a_3$ du troisième signal réfléchi, $a_i$ du $i^{\text{ième}}$ signal réfléchi, $a_n$ représente l'amplitude du signal direct, $Y_{n+i}$ étant le signal reçu à l'instant $n+i$.

**18.** Récepteur selon l'une des revendications 12 à 17, caractérisé par le fait que le dispositif (132) effectuant la convolution du signal reçu par un code comporte un dispositif à transfert de charges dont certaines cellules, correspondant au code binaire utilisé, sont reliées à une sortie.

**19.** Récepteur selon l'une des revendications 12 à 15, caractérisé par le fait qu'il comporte un dispositif de réduction de fréquence (82).

**20.** Emetteur selon l'une quelconque des revendications 8 à 11, caractérisé par le fait qu'il comporte une régie (8) pour répartir des informations à transmettre entre une pluralité de canaux de transmission.

**21.** Emetteur selon la revendication 20, caractérisé par le fait que ladite régie (8) est numérique.

**22.** Dispositif de transmission de données, caractérisé par le fait qu'il comporte un émetteur selon l'une des revendications 7 à 12, et/ou un récepteur selon l'une des revendications 13 à 22.

**23.** Utilisation du procédé selon l'une des revendications 1 à 7 pour l'enregistrement d'informations modulées selon une modulation telle qu'une modulation de phase synchronisée par une horloge, caractérisé par le fait que l'on enregistre avec ces informations un code, et qu'à la lecture des informations ainsi enregistrées, on lit le code et on le convolue ou corrèle avec les informations lues pour synchroniser l'horloge de lecture avec l'horloge d'enregistrement.

**24.** Utilisation selon la revendication 23, caractérisée par le fait que le code est un code régulier.

**25.** Utilisation selon la revendication 24, caractérisée par le fait que le code est du type 0, ¶, 0, ¶ ...

**26.** Utilisation selon l'une des revendications 23 à 25, caractérisée par le fait que le code est superposé aux informations enregistrées.

**27.** Utilisation selon l'une des revendications 23 à 25, caractérisée par le fait que le code est enregistré de façon intermittente.

**Claims**

**1.** A phase-modulation information transmission process using a transmitter and at least one receiver, said transmitter and said receiver comprising a clock (5), characterised in that said process comprises the following stages:
- amplitude modulation of the information which is phase-coded by a pseudo-random low-level, long-length,continuously transmitted code, at transmission;
- convolution and/or correlation of the signal received with said code, at reception;
- synchronisation of the receiver clock (5) with a peak produced by convolution or correlation of the signal received by said code.

2. A transmission process according to one of the preceding claims, characterised in that said process is a transmission process for digital television broadcasts.

3. A process according to Claim 2, characterised in that said process makes it possible to transmit information required to produce a medium-definition television picture as well as additional information which, after processing, is able to enhance picture quality.

4. A process according to one of Claims 1 to 3, characterised in that said process is an alphanumeric data transmission process.

5. A process according to Claim 1, characterised in that said process is a radiophonic sound transmission process.

6. A process according to one of the preceding claims, characterised in that the signal comprising first transitions (158) at instants (154) occurring at regular time intervals and second transitions (155) is modulated, the instant when said second transitions (155) occur constituting the coding of the information to be transmitted.

7. A process according to one of the preceding claims, characterised in that the amplitude of the amplitude-modulation signal is such that the attenuation brought about by said amplitude modulation prevents reception of the transitions (158 and 155).

8. A modulated electromagnetic radiation transmitter comprising an aerial (4), an amplifier (3), a source of signals to be transmitted (7), a phase coding device (2) and a clock (5), characterised in that it comprises a random-code generating device (13) connected to the clock and to amplitude modulation means (2 or 3) to amplitude-modulate the phase-modulated signals with the aid of said pseudo-random code.

9. A transmitter according to Claim 8, characterised in that it comprises a control centre (8) making it possible to modify and/or distribute the information to be transmitted between a plurality of transmission channels.

10. A transmitter according to Claim 8 or 9, characterised in that said transmitter is a transmitter of television broadcasts.

11. A transmitter according to Claim 8 or 9, characterised in that said transmitter is a transmitter of radiophonic broadcasts.

12. An electromagnetic wave receiver co-operating with a transmitter according to one of Claims 8 to 11 and comprising an aerial (4), an amplifier (3), a phase demodulator (20), a local oscillator (81) and a clock (5) connected to the local oscillator and the phase demodulator, characterised in that it comprises a pseudo-random code generator (130) connected to devices (131, 132) effecting correlation and/or convolution of the synchronising signal obtained by amplitude demodulation (3) of the signal received with the code produced by said code generator (130), these devices (131, 132) being connected to the amplifier (3) and the clock in order to synchronise the clock which is itself connected to the phase demodulator in order to synchronise the latter.

13. A receiver according to Claim 12, characterised in that said receiver is a receiver of television broadcasts.

14. A receiver according to Claim 12 or 13, characterised in that it comprises a video random access memory (24) and an address processor (22) which, in said video random access memory (24), replaces information found there by new transmitted information.

15. A receiver according to one of Claims 12 to 14, characterised in that it comprises a computer (23) and a video random access memory (24) to store at least one image, the computer being capable of modifying all or part of the image stored in the video random access memory according to the information received.

16. A receiver according to Claim 12 or 13, characterised in that it comprises a device which, by means of computation, makes it possible to eliminate multiple echoes by subtracting them from the signal or by delaying them so as to put them in modulo 2π phase with the direct signal.

17. A receiver according to Claim 16, characterised in that it comprises processors to eliminate multiple echoes by resolving the system:

$$Y_n = a_0 S_0 + a_1 S_1 + a_2 S_2 + \ldots + a_n S_n$$
$$Y_{n+1} = a_0 S_1 + a_1 S_2 + a_2 S_3 + \ldots + a_n S_{n+1}$$
$$Y_{n+2} = a_0 S_2 + a_1 S_3 + a_2 S_4 + \ldots + a_n S_{n+2}$$
$$Y_{n+3} = a_0 S_3 + a_1 S_4 + a_2 S_5 + \ldots + a_n S_{n+3}$$
$$\bullet$$
$$Y_{n+i} = a_0 S_i + a_1 S_{i+1} + a_2 S_{i+1} + \ldots + a_i S_{n+i}$$
$$\bullet$$
$$Y_{n+p} = a_0 S_p + a_1 S_{p+1} + \ldots + a_n S_{p+n}$$

where $a_1$ is the complex amplitude of the first reflected signal, $a_2$ of the second reflected signal, $a_3$ of the third reflected signal and $a_i$ of the i-th reflected signal, $a_n$ is the amplitude of the direct signal, and $Y_{n+i}$ is the signal received at the instant $n+i$.

18. A receiver according to one of Claims 12 to 17, characterised in that the device (132) effecting convolution of the signal received by a code comprises a charge-transfer device of which some cells, corresponding to the binary code used, are connected to an output.

19. A receiver according to one of Claims 12 to 15, characterised in that it comprises a frequency reduction device (82).

20. A transmitter according to one of Claims 8 to 11, characterised in that it comprises a control centre (8) to distribute information to be transmitted between a plurality of transmission channels.

21. A transmitter according to Claim 20, characterised in that said control centre (8) is digital.

22. Data transmission device, characterised in that it comprises a transmitter according to one of Claims 7 to 12 and/or a receiver according to one of Claims 13 to 22.

23. Use of the process according to one of Claims 1 to 7 for the recording of information modulated by modulation such as phase modulation synchronised by a clock, characterised in that a code is recorded with this information and, when the information thus recorded is read, the code is read and convoluted or correlated with the information read in order to synchronise the reading clock with the recording clock.

24. Use according to Claim 23, characterised in that the code is a regular code.

25. Use according to Claim 24, characterised in that the code is of the 0, π, 0, π ... type.

26. Use according to one of Claims 23 to 25, characterised in that the code is superimposed on the information recorded.

27. Use according to one of Claims 23 to 25, characterised in that the code is recorded intermittently.

20

**Patentansprüche**

1. Verfahren zur Übertragung von Informationen mit Phasenmodulation unter Verwendung eines Senders und mindestens eines Empfängers, wobei der Sender und der Empfänger je einen Taktgeber (5) enthalten, dadurch gekennzeichnet, daß das Verfahren die folgenden Schritte enthält:
   - Amplitudenmodulation der phasenkodierten Informationen mit einem Pseudozufallskode niedrigen Pegels, der eine große Länge hat und permanent ausgesendet wird, auf der Sendeseite,
   - Konvolution und/oder Korrelation des auf der Empfangsseite empfangenen Signals mit diesem Kode,
   - Synchronisation des Taktgebers (5) auf der Empfangsseite mit einem Impuls, der aus der Konvolution oder der Korrelation des empfangenen Signals mit diesem Kode abgeleitet wurde.

2. Verfahren zur Übertragung nach Anspruch 1, dadurch gekennzeichnet, daß das Verfahren ein Verfahren zur Übertragung digitaler Fernsehsendungen ist.

3. Verfahren nach Anspruch 2, dadurch gekennzeichnet, daß das Verfahren die für die Bildung eines Fernsehbilds mittlerer Auflösung notwendigen Informationen sowie zusätzliche Informationen übertragen kann, mit denen die Bildqualität nach einer Bildverarbeitung verbessert werden kann.

4. Verfahren nach einem beliebigen der Ansprüche 1 bis 3, dadurch gekennzeichnet, daß das Verfahren ein Verfahren zur Übertragung alphanumerischer Daten ist.

5. Verfahren nach Anspruch 1, dadurch gekennzeichnet, daß das Verfahren ein Verfahren zur Übertragung von Rundfunksendungen ist.

6. Verfahren nach einem beliebigen der vorhergehenden Ansprüche, dadurch gekennzeichnet, daß man das Signal moduliert, das erste Übergänge (158) zu regelmäßig zeitlich verteilten Zeitpunkten (154) und zweite Übergänge (155) aufweist, wobei der Zeitpunkt, an dem die zweiten Übergänge (155) auftreten, die Kodierung der zu übertragenden Information bildet.

7. Verfahren nach einem der vorhergehenden Ansprüche, dadurch gekennzeichnet, daß die Amplitude des Amplitudenmodulationssignals so gewählt wird, daß die durch die Amplitudenmodulation hervorgerufene Dämpfung nicht den Empfang der Übergänge (158, 155) verhindert.

8. Sender für eine modulierte elektromagnetische Strahlung mit einer Antenne (4), einem Verstärker (3), einer Quelle (7) für die auszusendenden Signale, einer Phasenkodiervorrichtung (2) und einem Taktgeber (5), dadurch gekennzeichnet, daß er eine Vorrichtung (13) zur Erzeugung eines Pseudozufallskodes aufweist, die an den Taktgeber und an Amplitudenmodulationsmittel (2 oder 3) angeschlossen ist, um mit Hilfe des Pseudozufallskodes die phasenmodulierten Signale einer Amplitudenmodulation zu unterwerfen.

9. Sender nach Anspruch 8, dadurch gekennzeichnet, daß er eine Steuerung (8) enthält, mit der die zu übertragenden Informationen verändert und/oder auf eine Mehrzahl von Übertragungskanälen aufgeteilt werden können.

10. Sender nach Anspruch 8 oder 9, dadurch gekennzeichnet, daß der Sender ein Fernsehsender ist.

11. Sender nach Anspruch 8 oder 9, dadurch gekennzeichnet, daß der Sender ein Rundfunksender ist.

12. Empfänger für elektromagnetische Wellen, der mit einem Sender nach einem der Ansprüche 8 bis 11 zusammenwirkt, mit einer Antenne (4), einem Verstärker (3), einem Phasendemodulator (20), einem örtlichen Oszillator (81) und einem Taktgeber (5), der mit dem örtlichen Oszillator und dem Phasendemodulator verbunden ist, dadurch gekennzeichnet, daß der Empfänger einen Pseudozufallskodegenerator (130) aufweist, der an Vorrichtungen (131, 132) angeschlossen ist, die die Korrelation und/oder die Konvolution des bei der Amplitudendemodulation (3) des empfangenen Signals mit dem vom Kodegenerator (130) erzeugten Kode erhaltenen Synchronisationssignals durchführen, wobei diese Vorrichtungen (131, 132) mit dem Verstärker (3) und dem Taktgeber zu dessen Synchronisation verbunden sind und der Taktgeber seinerseits an den Phasendemodulator angeschlossen ist, um ihn zu synchronisieren.

13. Empfänger nach Anspruch 12, dadurch gekennzeichnet, daß der Empfänger ein Fernsehempfänger ist.

14. Empfänger nach Anspruch 12 oder 13, dadurch gekennzeichnet, daß er einen Video-Arbeitsspeicher (24) und einen Adressenprozessor (22) besitzt, der in dem Videoarbeitsspeicher (24) dort gespeicherte Informationen durch neu übertragene Informationen ersetzt.

15. Empfänger nach einem der Ansprüche 12 bis 14, dadurch gekennzeichnet, daß er einen Rechner (23) und einen Videoarbeitsspeicher (24) zur Speicherung mindestens eines Bildes enthält, wobei der Rechner in der Lage ist, das im Videoarbeitsspeicher enthaltene Bild ganz oder teilweise aufgrund der empfangenen Informationen zu verändern.

16. Empfänger nach Anspruch 12 oder 13, dadurch gekennzeichnet, daß er eine Vorrichtung enthält, mit der durch Berechnung die Mehrfachechos eliminiert werden können, indem sie von dem Signal abgezogen werden oder indem sie so verzögert werden, daß sie mit dem direkten Signal in Phase modulo $2\pi$ gelangen.

17. Empfänger nach Anspruch 16, dadurch gekennzeichnet, daß er Prozessoren zur Eliminierung der Mehrfachechos besitzt, die folgendes System lösen

$$
\begin{aligned}
Y_n &= a_0 S_0 {}^+a_1 S_1 {}^+a_2 S_2 {}^+ \ldots {}^+a_n S_n \\
Y_{n+1} &= a_0 S_1 {}^+a_1 S_2 {}^+a_2 S_3 {}^+ \ldots {}^+a_n S_{n+1} \\
Y_{n+2} &= a_0 S_2 {}^+a_1 S_3 {}^+a_2 S_4 {}^+ \ldots {}^+a_n S_{n+2} \\
Y_{n+3} &= a_0 S_3 {}^+a_1 S_4 {}^+a_2 S_5 {}^+ \ldots {}^+a_n S_{n+3} \\
&\quad . \\
Y_{n+i} &= a_0 S_i {}^+a_1 S_{i+1} {}^+a_2 S_{i+1} {}^+ \ldots {}^+a_4 S_{n+i} \\
&\quad . \\
Y_{n+p} &= a_0 S_p {}^+a_1 S_{p+1} {}^+ \ldots {}^+ a_n S_{p+n}
\end{aligned}
$$

wobei $a_1$ die komplexe Amplitude des ersten reflektierten Signals, $a_2$ des zweiten reflektierten Signals, $a_3$ des dritten reflektierten Signals, $a_i$ des i-ten reflektierten Signals und $a_n$ die Amplitude des direkten Signals bedeutet, während $Y_{n+i}$ das im Zeitpunkt $n+i$ empfangene Signal bedeutet.

18. Empfänger nach einem der Ansprüche 12 bis 17, dadurch gekennzeichnet, daß die Vorrichtung (132), die die Konvolution des empfangene Signals mit einem Kode durchführt, eine Ladungstransfervorrichtung enthält, von der gewisse Zellen entsprechend dem verwendeten binären Kode an einen Ausgang angeschlossen sind.

19. Empfänger nach einem der Ansprüche 12 bis 15, dadurch gekennzeichnet, daß er eine Frequenzreduziervorrichtung (82) enthält.

20. Sender nach einem beliebigen der Ansprüche 8 bis 11, dadurch gekennzeichnet, daß er eine Steuerung (8) aufweist, um zu übertragende Informationen auf eine Mehrzahl von Übertragungskanälen zu verteilen.

21. Sender nach Anspruch 20, dadurch gekennzeichnet, daß die Steuerung (8) eine Digitalsteuerung ist.

22. Datenübertragungsvorrichtung, dadurch gekennzeichnet, daß sie einen Sender gemäß einem der Ansprüche 8 bis 11 und/oder einen Empfänger gemäß einem der Ansprüche 12 bis 21 enthält.

23. Verwendung des Verfahrens nach einem der Ansprüche 1 bis 7 zur Aufzeichnung von Informationen, die mit einer Modulation wie z.B. einer durch einen Taktgeber synchronisierten Phasenmodulation moduliert sind, dadurch gekennzeichnet, daß zusammen mit diesen Informationen ein Kode aufgezeichnet wird und daß bei der Wiedergabe der so aufgezeichneten Informationen der Kode gelesen und mit den gelesenen Informationen einer Konvolution oder Korrelation unterworfen wird, um den Wiedergabetaktgeber mit dem Aufzeichnungstaktgeber zu synchronisieren.

24. Verwendung nach Anspruch 23, dadurch gekennzeichnet, daß der Kode ein regelmäßiger Kode ist.

25. Verwendung nach Anspruch 24, dadurch gekennzeichnet, daß der Kode vom Typ 0, $\pi$, 0, $\pi$, ... ist.

26. Verwendung nach einem der Ansprüche 23 bis 25, dadurch gekennzeichnet, daß der Kode den gespeicherten Informationen überlagert ist.

27. Verwendung nach einem der Ansprüche 23 bis 25, dadurch gekennzeichnet, daß der Kode intermittierend aufgezeichnet wird.

# FIG_1

# FIG_2

## FIG_3

Diagram:
- Block 7 (camera)
- A/N (6)
- REGIE (8)
- CODAGE DE PHASE (2)
- Amplifier (3), Antenna (4)
- HORLOGE (5)
- CODE (13)

## FIG_4

Diagram:
- Block 7 (camera)
- CODAGE DE PHASE (2)
- Amplifier (3), Antenna (4)
- HORLOGE (5)
- CODE (13)

## FIG_5

Diagram:
- Block 7 (camera)
- A/N (6)
- CODAGE DE PHASE (2)
- Block 19
- Amplifier (3), Antenna (4)
- HORLOGE (5)
- CODE (13)

FIG_6

EP 0 286 665 B1

FIG_7

EP 0 286 665 B1

FIG_8

# FIG_9

# FIG_10

FIG_11

# FIG_12

EP 0 286 665 B1

FIG_13

FIG_14

FIG_15

EP 0 286 665 B1

FIG_16

## FIG_17

## FIG_18

HORLOGE

COMPTEUR

## FIG_19

A/N

A/N

MEMOIRE

FIG_20

# FIG_ 21

EP 0 286 665 B1